(19) **Europäisches Patentamt / European Patent Office / Office européen des brevets**

(11) **EP 3 225 029 B1**

(12) **FASCICULE DE BREVET EUROPEEN**

(45) Date de publication et mention de la délivrance du brevet:
**13.09.2023   Bulletin 2023/37**

(21) Numéro de dépôt: **15804907.2**

(22) Date de dépôt: **20.11.2015**

(51) Classification Internationale des Brevets (IPC):
**H04N 19/52** *(2014.01)*    **H04N 19/139** *(2014.01)*
**H04N 19/147** *(2014.01)*    **H04N 19/11** *(2014.01)*
**H04N 19/109** *(2014.01)*    **H04N 19/19** *(2014.01)*
**H04N 19/573** *(2014.01)*

(52) Classification Coopérative des Brevets (CPC):
**H04N 19/52; H04N 19/109; H04N 19/11;**
**H04N 19/139; H04N 19/147; H04N 19/19;**
**H04N 19/573**

(86) Numéro de dépôt international:
**PCT/FR2015/053148**

(87) Numéro de publication internationale:
**WO 2016/083709 (02.06.2016 Gazette 2016/22)**

(54) **PROCEDE D'ENCODAGE D'IMAGE ET EQUIPEMENT POUR LA MISE EN OEUVRE DU PROCEDE**

BILDCODIERUNGSVERFAHREN UND AUSRÜSTUNG ZUR UMSETZUNG DES VERFAHRENS

IMAGE ENCODING METHOD AND EQUIPMENT FOR IMPLEMENTING THE METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **24.11.2014   FR 1461367**

(43) Date de publication de la demande:
**04.10.2017   Bulletin 2017/40**

(73) Titulaire: **ATEME**
**78140 Velizy Villacoublay (FR)**

(72) Inventeurs:
- **AGYO, Zineb**
  **78000 Versailles (FR)**
- **MONNIER, Mathieu**
  **75014 Paris (FR)**
- **THIESSE, Jean-Marc**
  **92210 Saint Cloud (FR)**
- **LARBIER, Pierre**
  **91570 Bievres (FR)**

(74) Mandataire: **Plasseraud IP**
**66, rue de la Chaussée d'Antin**
**75440 Paris Cedex 09 (FR)**

(56) Documents cités:
EP-A2- 1 806 931        US-A1- 2005 025 249
US-A1- 2008 253 457     US-A1- 2014 307 788

- QI JI ET AL: "Efficient rate-distortion optimization for HEVC using SSIM and motion homogeneity", 2013 PICTURE CODING SYMPOSIUM (PCS), IEEE, 8 décembre 2013 (2013-12-08), pages 217-220, XP032567053, DOI: 10.1109/PCS.2013.6737722
- GUILLAUME LAROCHE ET AL: "RD Optimized Coding for Motion Vector Predictor Selection", IEEE TRANSACTIONS ON CIRCUITS AND SYSTEMS FOR VIDEO TECHNOLOGY, IEEE SERVICE CENTER, PISCATAWAY, NJ, US, vol. 17, no. 12, 1 décembre 2008 (2008-12-01), pages 1681-1691, XP011234848, ISSN: 1051-8215
- CHUOHAO YEO ET AL: "On rate distortion optimization using SSIM", 2012 IEEE INTERNATIONAL CONFERENCE ON ACOUSTICS, SPEECH AND SIGNAL PROCESSING (ICASSP 2012) : KYOTO, JAPAN, 25 - 30 MARCH 2012 ; [PROCEEDINGS], IEEE, PISCATAWAY, NJ, 25 mars 2012 (2012-03-25), pages 833-836, XP032227256, DOI: 10.1109/ICASSP.2012.6288013 ISBN: 978-1-4673-0045-2

- **G.J. HAN ET AL: "Overview of the High Efficiency Video Coding (HEVC) Standard", IEEE TRANSACTIONS ON CIRCUITS AND SYSTEMS FOR VIDEO TECHNOLOGY, 1 janvier 2012 (2012-01-01), pages 1-1, XP055045358, ISSN: 1051-8215, DOI: 10.1109/TCSVT.2012.2221191**
- **GARY J. SULLIVAN ET AL: "Overview of the High Efficiency Video Coding (HEVC) Standard", IEEE TRANSACTIONS ON CIRCUITS AND SYSTEMS FOR VIDEO TECHNOLOGY, vol. 22, no. 12, 1 December 2012 (2012-12-01), pages 1649-1668, XP055388661, USA ISSN: 1051-8215, DOI: 10.1109/TCSVT.2012.2221191**

**Description**

La présente invention se rapporte à un procédé d'encodage d'image et un dispositif pour la mise en oeuvre de ce procédé. Elle s'applique notamment au codage d'images d'un flux vidéo.

Les données vidéo font en général l'objet d'un codage source visant à les compresser afin de limiter les ressources nécessaires à leur transmission et/ou à leur stockage. Il existe de nombreux standards de codage, tels que H.264/AVC, H.265/HEVC et MPEG-2, qui peuvent être utilisés à cette fin.

On considère un flux vidéo comprenant un ensemble d'images. Dans les schémas de codage classique, les images du flux vidéo à encoder sont typiquement considérées selon une séquence d'encodage, et chacune est divisée en ensembles de pixels eux aussi traités séquentiellement, par exemple en commençant en haut à gauche et en finissant en bas à droite de chaque image.

L'encodage d'une image du flux est ainsi effectué en divisant une matrice de pixels correspondant à l'image en plusieurs ensembles, par exemple des blocs de taille fixe 16 × 16, 32 × 32 ou 64 × 64, et en encodant ces blocs de pixels selon une séquence de traitement donnée. Certains standards, comme le H.264/AVC, prévoient la possibilité de décomposer des blocs de taille 16 × 16 (appelés alors macro-blocs) en sous-blocs, par exemple de taille 8 × 8 ou 4 × 4, afin d'effectuer les traitements d'encodage avec une granularité plus fine.

La techniques existantes de compression vidéo peuvent être divisées en deux grandes catégories : d'une part la compression dite « Intra », dans laquelle les traitements de compression sont effectuées sur les pixels d'une unique image ou trame vidéo, et d'autre part la compression dite « Inter », dans laquelle les traitements de compression sont effectuées sur plusieurs images ou trames vidéo. Dans le mode Intra, le traitement d'un bloc (ou ensemble) de pixels comprend typiquement une prédiction des pixels du bloc effectuée à l'aide de pixels causaux (précédemment codés) présents dans l'image en cours d'encodage (dite « image courante »), auquel cas on parle de « prédiction Intra ». Dans le mode Inter, le traitement d'un bloc (ou ensemble) de pixels comprend typiquement une prédiction des pixels du bloc effectuée à l'aide de pixels issus d'images précédemment codées, auquel cas on parle de « prédiction Inter » ou de « compensation de mouvement » (en anglais « motion compensation »).

Ces deux types de codage sont utilisés dans les codées vidéo existants (MPEG2, H.264/AVC, HEVC) et sont décrits pour le codée HEVC dans l'article intitulé « Overview of the High Efficiency Video Coding (HEVC) Standard », par Gary J. Sullivan et al., IEEE Transactions on Circuits and Systems for Video Technology, vol. 22, No. 12, Dec. 2012.

Cette exploitation des redondances spatiales et/ou temporelles permet d'éviter de transmettre ou de stocker la valeur des pixels de chaque bloc (ou ensemble) de pixels, en représentant certains au moins des blocs par un résiduel de pixels représentant la différence (ou la distance) entre les valeurs de prédiction des pixels du bloc et les valeurs réelles des pixels du bloc prédit. L'information des résiduels de pixels est présente dans les données générées par l'encodeur après transformée (par exemple, de type DCT) et quantification afin de réduire l'entropie des données générées par l'encodeur.

Il est souhaitable de réduire autant que possible les informations additionnelles générées par la prédiction des pixels et présentes en sortie de l'encodeur afin d'augmenter l'efficacité d'un schéma de codage/compression à un niveau de distorsion donné. A l'inverse, on peut aussi chercher à réduire ces informations additionnelles pour augmenter l'efficacité d'un schéma de codage/compression à un niveau de débit de sortie de l'encodeur donné.

Un encodeur vidéo effectue typiquement un choix de mode d'encodage correspondant à une sélection de paramètres d'encodage pour un ensemble de pixels traité. Cette prise de décision peut être implémentée en optimisant une métrique de débit et distorsion, les paramètres d'encodage sélectionnés par l'encodeur étant ceux qui minimisent un critère débit-distorsion. Le choix du mode d'encodage a alors un impact sur les performances de l'encodeur, à la fois en termes de gain de débit et de qualité visuelle.

En effet, un mauvais choix de mode de codage peut entrainer des artefacts qui se traduisent par une dégradation de la qualité visuelle perçue. Les méthodes de calcul basées sur l'optimisation débit-distorsion permettent de réduire le débit en sortie de l'encodeur, néanmoins parfois aux dépens du rendu visuel.

La distorsion est en effet calculée à l'aide de métriques dites « objectives », telles que la somme des différences absolues (en anglais « Sum of Absolute Différences », ou SAD) ou l'erreur quadratique moyenne (en anglais « Mean Square Error », ou MSE), qui s'avèrent être très faiblement corrélées avec la qualité perceptuelle. En effet, certains procédés de compression vidéo peuvent améliorer la qualité visuelle alors qu'ils dégradent les métriques objectives.

Des métriques de distorsion basées sur la perception visuelle ont été proposées comme alternatives aux mesures mathématiques objectives. Ces métriques utilisent une modélisation des propriétés psycho-visuelles connues du système visuel humain, et sont appelés métriques HVS (de l'anglais « Human Visual System »). On peut citer comme exemples de métrique HVS la métrique JND (de l'anglais « Just Noticible Différence ») décrite dans l'article « Sarnoff JND vision model », J. Lubin et al., T1A1.5 Working Group Document, T1 Standards Committee, 1997, la métrique DVQ (de l'anglais « Digital Video Quality ») décrite dans l'article « Digitial vidéo quality metric based on human vision », Journal of electronic imaging , vol. 10, n° 1, January 2001, pp. 20 - 29, ou encore la métrique VSSIM (de l'anglais « Video Structural Similarity Index ») décrite dans l'article « Video Quality Assessment Based on Structural Distorsion MEasurement », Z. Wang et al., IEEE Signal Proc. Image Communication, vol. 19, n°2, Feb. 2004, pp. 121 - 132.

Le document suivant est aussi cité comme étant pertinent: QI JI ET AL: "Efficient rate-distortion optimization for HEVC using SSIM and motion homogeneity", 2013 PICTURE CODING SYMPOSIUM (PCS), IEEE, 8 décembre 2013 (2013-12-08), pages 217-220, XP032567053,DOI: 10.1 109/PCS.2013.6737722.

Ces méthodes de mesure de la distorsion visuelle (aussi appelée « distorsion subjective ») ont l'inconvénient d'être très complexes, et ne sont pas envisageables en pratique dans un encodeur. Elles sont par exemple trop coûteuses en calcul pour être mises en oeuvre dans un encodeur vidéo temps-réel. Elles ne sont utiles qu'à la fin de l'encodage pour estimer a posteriori la qualité visuelle d'une vidéo encodée/compressée en utilisant des métriques objectives.

Une autre métrique de distorsion subjective, c'est-à-dire basée sur la perception visuelle, a été proposée par A. Bhat et al. dans l'article « A new perceptual quality metric for compressed vidéo », avec l'ambition d'intégrer l'utilisation de la métrique de qualité perceptuelle proposée dans un algorithme de choix de mode de codage d'un codée vidéo de type H.264/AVC. La métrique proposée dans l'article se calcule comme suit :

$$MOSp_{bloc} = 1 - k_{bloc}(MSE_{bloc}) \qquad (1)$$

où $MOSp_{bloc}$ est la qualité perceptuelle du bloc traité, $k_{bloc}$ une constante calculée en fonction de la présence de détails dans le bloc, et $MSE_{bloc}$ l'Erreur Quadratique Moyenne. Cette métrique s'appuie sur le principe que les artefacts auront tendance à être plus visibles sur les zones sans détails, et se base donc uniquement sur les caractéristiques locales du bloc traité.

Il existe ainsi un besoin pour un procédé d'encodage d'image amélioré dans la prise en compte du mouvement dans un ensemble d'images ou un flux vidéo à encoder.

Un objet de la présente invention est de proposer un procédé d'encodage d'image amélioré dans la prise en compte du mouvement.

Un autre objet de la présente invention est de proposer un procédé d'encodage d'image par blocs permettant prendre en compte le mouvement quelle que soit la nature du bloc traité.

Selon un premier aspect, il est proposé un procédé d'encodage selon la revendication 1

Le procédé proposé permet de prendre en compte le mouvement dans un ensemble d'images à encoder, et ce quelle que soit la nature du bloc. En particulier, le procédé proposé permet la prise en compte du mouvement sans se limiter aux caractéristiques locales du bloc traité. La qualité visuelle du mode d'encodage considéré est quantifiée sous forme d'une distorsion, ce qui permet d'améliorer les choix de l'encodeur pour tous les modes et également éviter les problèmes de skip abusif.

De plus, le procédé proposé présente l'avantage de proposer une détermination de distorsion visuelle qui n'impacte pas significativement la complexité des calculs effectués par l'encodeur. Ainsi, le procédé proposé a l'avantage d'une mise en oeuvre peu complexe, d'une complexité de calcul très faible, et d'une vitesse d'exécution rapide qui autorise notamment son intégration dans une solution d'encodage temps-réel sans impact significatif. Il permet ainsi notamment d'améliorer de façon globale la qualité du codage au sein d'une image appartenant à une séquence vidéo.

Le procédé proposé convient particulièrement bien, bien que de façon non exclusive, pour l'encodage ou la compression d'une image d'une séquence d'images selon un schéma du type H.261, MPEG-1 Part 2, H.262, MPEG-2 Part 2, H.264, AVC, MPEG-4 Part 2, H. 265, HEVC (High Efficiency Video Coding) ou SHVC (Scalable HEVC). Mais il convient aussi pour l'encodage d'images selon tout schéma d'encodage vidéo opérant sur des images découpées en blocs dans lequel les blocs sont encodés selon une pluralité de modes de codage comprenant au moins un mode de codage de type à prédiction par corrélation temporelle utilisant une pluralité d'images du flux vidéo à encoder.

Le procédé proposé pourra avantageusement être mis en oeuvre dans les cas où le mode de codage de type à prédiction par corrélation temporelle utilisant une pluralité d'images de l'ensemble d'images est de type utilisant une prédiction de mouvement à partir d'images précédemment codées (type de mode de codage référencé dans certains codeurs vidéo sous l'appellation « Inter ») ou de type utilisant un vecteur prédicteur prédéterminé sélectionné à partir de blocs voisins du bloc courant précédemment codés (type de mode de codage référencé dans certains codeurs vidéo sous l'appellation « Skip »).

Dans une mise en oeuvre particulière du procédé proposé, le procédé comprend en outre : déterminer une pluralité de N vecteurs d'estimation de mouvement du bloc courant, N étant un entier supérieur ou égal à deux, chaque vecteur d'estimation de mouvement pointant respectivement sur un bloc corrélé au bloc courant dans N images respectives distinctes de la première image et précédemment codées selon la séquence d'encodage, et distinctes deux-à-deux. Dans cette mise en oeuvre particulière, la métrique de distorsion visuelle utilise en outre des distances respectives entre un vecteur de prédiction temporelle du bloc courant pointant sur une parmi les images respectives et un parmi la pluralité de N vecteurs d'estimation de mouvement du bloc courant pointant sur ladite une parmi les images respectives.

La prise en compte de deux ou plus vecteurs d'estimation de mouvement et de deux ou plus vecteurs de prédiction correspondants respectivement aux vecteurs d'estimation de mouvement permet d'affiner la mesure de distorsion visuelle pour le mode de codage considéré et de mieux prendre en compte le mouvement dans l'ensemble d'images.

Dans une mise en oeuvre particulière du procédé proposé, la métrique de distorsion visuelle pour le mode de codage de type à prédiction par corrélation temporelle utilisant N images de l'ensemble d'images, N étant un entier supérieur ou égal à 1, est de la forme: $\sum_{i=1}^{N} dist\left(v_{t,i}, v_{ME,i}\right)$, où $dist(v_{t,i}, v_{ME,i})$ est une distance entre un i$^{ème}$ vecteur d'estimation de mouvement, $v_{ME,i}$ parmi N vecteurs d'estimation de mouvement pointant respectivement sur un bloc corrélé au bloc courant dans N images respectives deux-à-deux distinctes, distinctes de la première image et précédemment codées selon la séquence d'encodage, et un i$^{ème}$ vecteur de prédiction temporelle, $v_{ti}$ parmi N vecteurs de prédiction temporelle du bloc courant, pointant sur la même image que le vecteur d'estimation de mouvement $v_{ME,i}$.

Dans une mise en oeuvre particulière du procédé proposé, la métrique de distorsion visuelle pour le mode de codage de type à prédiction par corrélation temporelle utilisant N images de l'ensemble d'images, N étant un entier supérieur ou égal à 1, est de la forme: $C \times \lambda \times M_{blocSize} \times \sum_{i=1}^{N} \left(K_i \times dist\left(v_{t,i}, v_{ME,i}\right)\right)$, où C est une constante de normalisation, $\lambda$ est un coefficient multiplicateur de Lagrange, $dist(v_{t,i}, v_{ME,i})$ est une distance entre un i$^{ème}$ vecteur d'estimation de mouvement, $v_{ME,i}$ parmi N vecteurs d'estimation de mouvement pointant respectivement sur un bloc corrélé au bloc courant dans N images respectives deux-à-deux distinctes, distinctes de la première image et précédemment codées selon la séquence d'encodage, et un i$^{ème}$ vecteur de prédiction temporelle, $v_{ti}$ parmi N vecteurs de prédiction temporelle du bloc courant, pointant sur la même image que le vecteur d'estimation de mouvement $v_{ME,i}$, $K_i$ est un degré de confiance du i$^{ème}$ vecteur d'estimation de mouvement $v_{ME,i}$, et $M_{blocSize}$ est une constante de normalisation déterminée en fonction de la taille du bloc courant.

La pluralité de modes de codage peut en outre comprendre un mode de codage à prédiction par corrélation spatiale de type Intra.

Dans une mise en oeuvre particulière du procédé proposé, la métrique de distorsion visuelle inclut un facteur de confiance dans l'estimation de mouvement. Cela permet de pondérer l'impact de l'estimation de mouvement sur la mesure de distorsion visuelle. L'estimation de mouvement peut en effet générer des vecteurs plus ou moins précis selon la qualité de l'estimateur utilisé ou bien dans des circonstances particulières (source vidéo très bruité, objet apparaissant ou disparaissant d'une image à l'autre).

Avantageusement, le facteur de confiance sera déterminé relativement à l'inverse d'une mesure de corrélation entre le bloc courant et son déplacement selon un vecteur d'estimation de mouvement.

Le procédé proposé peut s'inscrire dans le cadre d'une optimisation d'un critère de décision à partir de laquelle un mode de codage du bloc courant est sélectionné par l'encodeur.

Le critère de décision peut avantageusement être choisi de la forme : $J' = D + \lambda R + D'$, où $D$ est une métrique de distorsion introduite par l'encodage mesurant la corrélation entre le bloc courant et le bloc prédit, $\lambda$ est un coefficient multiplicateur de Lagrange, R représente un débit de codage, et $D'$ est une métrique de distorsion visuelle.

La qualité des optimisations débit-distorsion classiquement mises en oeuvre dans les encodeurs peut ainsi être améliorée en intégrant à un critère de décision débit-distorsion mesurant une distorsion objective une mesure de distorsion subjective telle que proposée ci-dessus. Cette mesure de distorsion visuelle (ou distorsion subjective) se base sur le mouvement de l'image, et peut être utilisée pour influencer automatiquement le choix de l'encodeur et éviter les artéfacts qui ne sont pas détectables par des mesures de distorsion objective.

Pour un mode test de codage de type à prédiction par corrélation temporelle utilisant deux images de l'ensemble d'images, la métrique $D'$ de distorsion visuelle peut avantageusement être choisie de la forme :

$$D' = C \times \lambda \times M_{blocSize} \times \left(K_{L0} \times dist(vL0_t, vL0_{ME})\right),$$

où C est une constante de normalisation, $\lambda$ est le coefficient multiplicateur de Lagrange, $dist(vL0_t, vL0_{ME})$ est une distance entre le premier vecteur de prédiction temporelle, $vL0_t$ et le premier vecteur d'estimation de mouvement, $vL0_{ME}$, $K_{L0}$ est un degré de confiance du premier vecteur d'estimation de mouvement $vL0_{ME}$, et $M_{blocSize}$ est une constante de normalisation déterminée en fonction de la taille du bloc courant.

Pour un mode test de codage de type à prédiction par corrélation temporelle utilisant trois images de l'ensemble d'images, la métrique $D'$ de distorsion visuelle peut avantageusement être choisie de la forme :

$$D' = C \times \lambda \times M_{blocSize} \times \left(K_{L0} \times dist(vL0_t, vL0_{ME}) + K_{L1} \times dist(vL1_t, vL1_{ME})\right),$$

où C est une constante de normalisation, $\lambda$ est le coefficient multiplicateur de Lagrange, $dist(vL0_t, vL0_{ME})$ est une distance entre le premier vecteur de prédiction temporelle, $vL0_t$, et le premier vecteur d'estimation de mouvement, $vL0_{ME}$, $K_{L0}$ est un degré de confiance du premier vecteur d'estimation de mouvement $vL0_{ME}$, $dist(vL1_t, vL1_{ME})$ est une distance entre le deuxième vecteur de prédiction temporelle, $vL1_t$, et le deuxième vecteur d'estimation de mouvement, $vL1_{ME}$, $K_{L1}$ est un degré de confiance du deuxième vecteur d'estimation de mouvement $vL0_{ME}$ et $M_{blocSize}$ est une constante de normalisation déterminée en fonction de la taille du bloc courant.

Pour un mode test de codage de type à prédiction par corrélation spatiale, la métrique $D'$ de distorsion visuelle peut être avantageusement définie comme étant une constante prédéterminée.

Selon un deuxième aspect, il est proposé un dispositif d'encodage d'images comprenant une interface d'entrée configurée pour recevoir une première image d'un ensemble d'images, et une unité d'encodage d'images, couplée de manière opérationnelle à l'interface d'entrée, et configurée pour encoder chaque bloc selon un parmi une pluralité de modes de codage comprenant au moins un mode de codage de type à prédiction par corrélation temporelle utilisant une pluralité d'images de l'ensemble d'images selon le procédé proposé.

Selon un autre aspect, il est proposé un programme d'ordinateur, chargeable dans une mémoire associée à un processeur, et comprenant des portions de code pour la mise en oeuvre des étapes du procédé proposé lors de l'exécution dudit programme par le processeur, ainsi qu'un ensemble de données représentant, par exemple par voie de compression ou d'encodage, ledit programme d'ordinateur.

Un autre aspect concerne un support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoire et à un module d'interface entrées/sorties, conduire l'ordinateur à encoder une première image découpée en blocs selon le procédé proposé.

D'autres particularités et avantages de la présente invention apparaîtront dans la description ci-après d'exemples de réalisation non limitatifs, en référence aux dessins annexés, dans lesquels :

- La figure 1 est un schéma illustrant l'architecture d'un codeur pour la mise en oeuvre du procédé proposé ;
- Les figures 2a, 2b, et 2c sont des diagrammes illustrant des modes de prédiction Intra ;
- La figure 3 est un diagramme illustrant une détermination de vecteur médian pour le codage en mode de prédiction Inter ;
- Les figures 4a et 4b sont des diagrammes illustrant le procédé proposé selon différents modes particuliers de l'invention ;

Dans la description détaillée ci-après de modes de réalisation de l'invention, de nombreux détails spécifiques sont présentés pour apporter une compréhension plus complète. Néanmoins, l'homme du métier peut se rendre compte que des modes de réalisation peuvent être mis en pratique sans ces détails spécifiques. Dans d'autres cas, des caractéristiques bien connues ne sont pas décrites en détail pour éviter de compliquer inutilement la description.

Le procédé proposé peut être mis en oeuvre par tout type d'encodeur d'image d'un ensemble d'images utilisant un mode de codage de type à prédiction par corrélation temporelle utilisant une pluralité d'images de l'ensemble d'images, comme par exemple un codée vidéo conforme aux standards H.264/AVC, H.265/HEVC, et/ou MPEG-2.

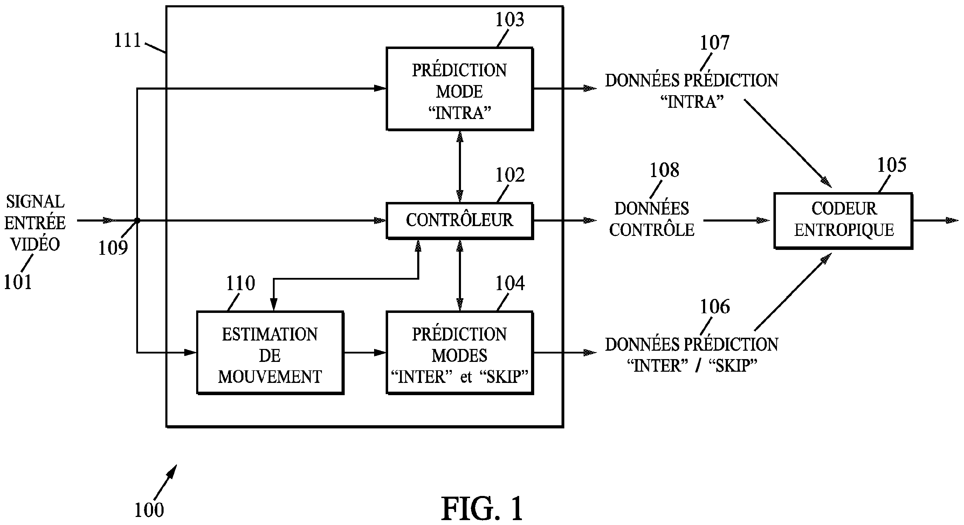

En référence à la figure 1, l'encodeur 100 reçoit en entrée 109 un flux vidéo d'entrée 101 comprenant une pluralité d'images à traiter pour effectuer l'encodage du flux. L'encodeur 100 comprend un contrôleur 102, couplé de manière opérationnelle à l'interface d'entrée 109, qui pilote une unité d'estimation de mouvement 110 et une unité de prédiction 104 pour les prédictions Inter et Skip, ainsi qu'une unité de prédiction de mode Intra 103. Les données reçues sur l'interface d'entrée 109 sont transmises en entrée des unités de prédiction de mode Intra 103, d'estimation de mouvement 110, de prédiction Inter/skip 104 et du contrôleur 102. L'ensemble contrôleur 102, unité d'estimation de mouvement 110, unité de prédiction 104 pour les prédictions Inter et Skip, et unité de prédiction de mode Intra 103 forme une unité d'encodage 111 couplée de manière opérationnelle à l'interface d'entrée 109.

L'unité de prédiction de mode Intra 103 génère des données de prédiction Intra 107 qui sont fournies en entrée d'un codeur entropique 105. L'unité d'estimation de mouvement 110 génère quant à elle des données d'estimation de mouvement qui sont fournies au contrôleur 102 ainsi qu'à l'unité de prédiction des modes Inter/skip 104 pour les besoins de la prédiction en mode Inter. L'unité de prédiction de modes Inter/skip 104 génère des données de prédiction Inter ou Skip qui sont fournies en entrée du codeur entropique 105. Par exemple, les données fournies au décodeur pour une prédiction de type Inter peuvent comprendre un résiduel de pixels et des informations concernant un ou plusieurs vecteurs de mouvement. Ces informations relatives à un ou plusieurs vecteurs de mouvement peuvent comprendre un ou plusieurs indices identifiant un vecteur prédicteur dans une liste de vecteurs prédicteurs connue du décodeur. Les données fournies au décodeur pour une prédiction de type Skip ne comporteront typiquement pas de résiduel de pixels, et pourront aussi comprendre des informations identifiant un vecteur prédicteur dans une liste de prédicteurs connue du décodeur. La liste de vecteurs prédicteurs utilisée pour le codage de type Inter ne sera pas nécessairement identique à la liste de vecteurs prédicteurs utilisée pour le codage de type Skip. Le contrôleur 102 génère des données de contrôle 108 qui sont aussi fournies en entrée du codeur entropique 105.

Le contrôleur 102 est configuré pour piloter l'unité de prédiction de mode Intra 103 et l'unité de prédiction de modes Inter/skip 104 afin de contrôler les données de prédiction qui sont respectivement fournies en entrée du codeur entropique 105 par l'unité de prédiction de mode Intra 103 et l'unité de prédiction de modes Inter/skip 104. En fonction du schéma d'encodage mis en oeuvre par l'encodeur 100, le contrôleur 102 peut en outre être configuré pour sélectionner parmi les différents types de mode de prédiction (mode Intra, mode Inter ou mode Skip en fonctions des modes de codage implémentés dans l'unité d'encodage 111) celui pour lequel des données de prédiction seront transmises au codeur entropique 105. Ainsi, le schéma d'encodage peut comprendre une décision pour chaque ensemble d'image traité visant à choisir le type de prédiction pour lequel des données seront transmises au codeur entropique 105. Ce choix sera typiquement mis en oeuvre par le contrôleur, pour décider de l'application du mode de prédiction Inter, du mode de prédiction Intra ou du mode de prédiction Skip au bloc en cours de traitement. Cela permet de commander l'envoi au codeur entropique de données de prédiction Intra 107 ou bien de données de prédiction Inter ou Skip 106 en fonction de la décision prise par le contrôleur 102.

L'encodeur 100 peut être un ordinateur, un réseau d'ordinateurs, un composant électronique, ou un autre appareil comportant un processeur couplé de manière opérationnelle à une mémoire, ainsi que, selon le mode de réalisation choisi, une unité de stockage de données, et d'autres éléments matériels associés comme une interface de réseau et un lecteur de support pour lire un support de stockage amovible et écrire sur un tel support (non représentés sur la figure). Le support de stockage amovible peut être, par exemple, un disque compact (CD), un disque vidéo/polyvalent numérique (DVD), un disque flash, une clé USB, etc. En fonction du mode de réalisation, la mémoire, l'unité de stockage de données ou le support de stockage amovible contient des instructions qui, lorsqu'elles sont exécutées par le contrôleur 102, amènent ce contrôleur 102 à effectuer ou contrôler les parties interface d'entrée 109, prédiction en mode Intra 103, prédiction en mode Inter/skip 104, estimation de mouvement 110 et/ou traitement de données des exemples de mise en oeuvre du procédé proposé décrits dans les présentes. Le contrôleur 102 peut être un composant implémentant un processeur ou une unité de calcul pour l'encodage d'images selon le procédé proposé et le contrôle des unités 109, 110, 103, 104, 105 de l'encodeur 100.

En outre, l'encodeur 100 peut être mis en oeuvre sous forme logicielle, comme décrit ci-dessus, auquel cas il prend la forme d'un programme exécutable par un processeur, ou sous forme matérielle (ou « hardware »), comme un circuit intégré spécifique application (ASIC), un système sur puce (SOC), ou sous forme d'une combinaison d'éléments matériels et logiciels, comme par exemple un programme logiciel destiné à être chargé et exécuté sur un composant de type FPGA (Field Programmable Gate Array). Les *SOC* (*System On Chip*) ou système sur puce sont des systèmes embarqués qui intègrent tous les composants d'un système électronique dans une puce unique. Un *ASIC* (*Applicatrion-specific Intergrated Circuit*) est un circuit électronique spécialisé qui regroupe des fonctionnalités sur mesure pour une application donnée. Les ASIC sont généralement configurés lors de leur fabrication et ne peuvent être que simulés par l'utilisateur. Les circuits logiques programmables de type *FPGA* (*Field-Programmable Gate Array*) sont des circuits électroniques reconfigurables par l'utilisateur.

Un encodeur peut également utiliser des architectures hybrides, comme par exemple des architectures basées sur un CPU+FPGA, un GPU (*Graphics Processing Unit*) ou un MPPA (*Multi-Purpose Processor Array*).

L'image en cours de traitement est divisée en blocs ou unités de codage (en anglais « Coding Unit », ou CU), dont la forme et la taille sont déterminées en fonction notamment de la taille de la matrice de pixels représentant l'image, par exemple en macroblocs de forme carrée de $16 \times 16$ pixels. On forme ainsi un ensemble de blocs pour lequel on définit une séquence de traitement (aussi appelé « parcours de traitement »). Dans le cas de blocs de forme carrée, on peut par exemple traiter les blocs de l'image courante en commençant par celui situé en haut à gauche de l'image, suivi de celui immédiatement à droite du précédent, jusqu'à arriver à la fin de la première ligne de blocs pour passer au bloc le plus à gauche dans la ligne de blocs immédiatement en-dessous de cette première ligne, pour terminer le traitement par le bloc le plus en bas et à droite de l'image.

On considère ainsi un « bloc courant » (parfois dénommé « bloc d'origine »), c'est-à-dire un bloc en cours de traitement dans l'image courante. Le traitement du bloc courant peut comprendre le partitionnement du bloc en sous-blocs, afin de traiter le bloc avec une granularité spatiale plus fine que celle obtenue avec le bloc. Le traitement d'un bloc comprend par ailleurs la prédiction des pixels du bloc, en exploitant la corrélation spatiale (dans la même image) ou temporelle (dans les images précédemment codées) entre les pixels. Lorsque plusieurs types de prédiction, comme par exemple une prédiction de type Intra, une prédiction de type Inter, et/ou une prédiction de type skip sont implémentés dans l'encodeur, la prédiction des pixels du bloc comprend typiquement la sélection d'un type de prédiction du bloc et d'informations de prédiction correspondants au type sélectionné, l'ensemble formant un jeu de paramètres d'encodage.

La prédiction du bloc de pixels traité permet de calculer un résiduel de pixels, qui correspond à l'écart entre les pixels du bloc courant et les pixels du bloc de prédiction, et est transmis dans certains cas au décodeur après transformée et quantification.

Pour coder un bloc courant, plusieurs modes de codage sont ainsi possibles et il est nécessaire d'inclure dans les données générées par l'encodage des informations de codage 106-108 signalant le choix de mode de codage qui a été effectué lors de l'encodage et selon lequel les données ont été encodées. Ces informations de codage 106-108 peuvent comprendre notamment le mode de codage (par exemple le type particulier de codage prédictif parmi les codages « Intra » et « Inter », ou parmi les codages « Intra », « Inter» et « Skip »), le partitionnement (dans le cas d'un ou plusieurs blocs partitionnés en sous-blocs), ainsi qu'une information de mouvement 106 dans le cas d'un codage prédictif de type « Inter » ou « Skip » et un mode de prédiction Intra 107 dans le cas d'un codage prédictif de type « Intra ». Comme indiqué ci-dessus pour les modes de codage « Inter » et « Skip », ces deux dernières informations peuvent elles aussi prédites afin de réduire leur coût de codage, par exemple en exploitant les informations des blocs voisins du bloc courant.

On décrit ci-après des exemples de modes de prédiction « Intra », « Inter » et « skip », afin de faciliter la compréhension de la mise en oeuvre du procédé proposé pour un codage vidéo utilisant ces modes de prédiction.

Comme indiqué ci-dessus, le codage prédictif en mode « Intra » inclut une prédiction des pixels d'un bloc (ou ensemble) de pixels en cours de traitement à l'aide des pixels précédemment codés de l'image courante. Il existe différents modes de codage prédictif de type « Intra », dont certains sont décrits ci-après :

Dans le mode de prédiction « Intra » dit « DC » (pour « Discrete Continuous »), on utilise les valeurs des pixels voisins du bloc courant appartenant à des blocs qui ont été précédemment codés, et on calcule une moyenne des valeurs de ces pixels voisins. Le bloc prédictif est construit en utilisant pour chaque pixel la valeur moyenne obtenue.

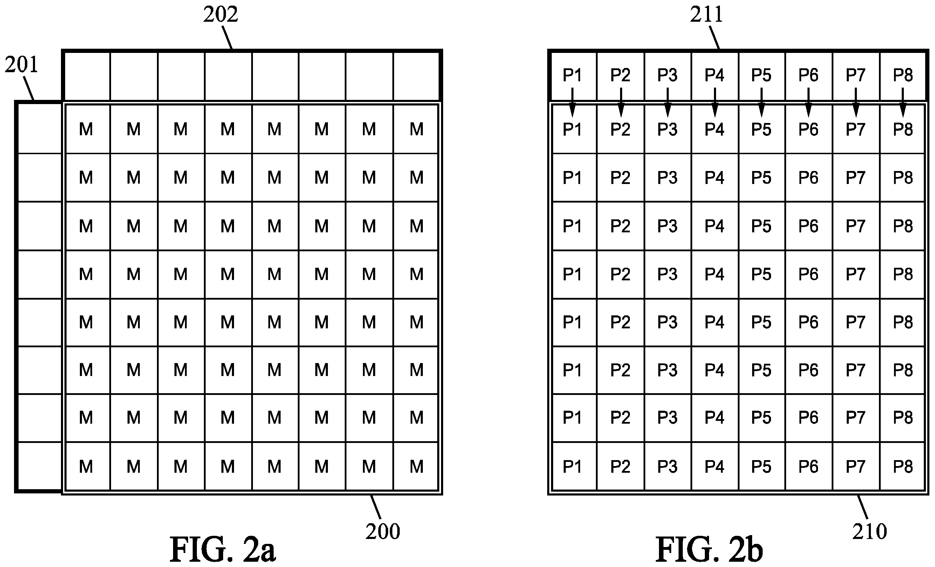

Par exemple, si l'on considère un bloc 200 de 8x8 pixels tel que celui illustré sur la figure 2a, on utilise les deux ensembles de 8 pixels voisins 201, 202 du bloc voisin disposé à gauche du bloc courant et du bloc voisin disposé au-dessus du bloc courant. On calcule une valeur moyenne M des valeurs de ces 16 pixels, que l'on utilise pour remplir les valeurs des pixels du bloc prédictif 200.

Dans le mode de prédiction « Intra » dit « V » (pour « Vertical »), on utilise les valeurs des pixels voisins du bloc courant appartenant à au bloc voisin disposé au-dessus du bloc courant, lorsque ces pixels voisins ont été précédemment codés, et on recopie la valeur de chaque pixel voisin pour les pixels de la colonne correspondante dans le bloc prédictif.

Par exemple, si l'on considère un bloc 210 de 8x8 pixels tel que celui illustré sur la figure 2b, on utilise par exemple l'ensemble de 8 pixels voisins 211 du bloc voisin disposé à gauche du bloc courant, dans le cas où le parcours de codage des blocs est tel que ce bloc a déjà été codé. On recopie la valeur de chacun des 8 pixels voisins dans la colonne correspondante du bloc prédictif 210.

Dans le mode de prédiction « Intra » dit « H » (pour « Horizontal »), on utilise les valeurs des pixels voisins du bloc courant appartenant à au bloc voisin disposé à gauche ou à droite du bloc courant, lorsque ces pixels voisins ont été précédemment codés, et on recopie la valeur de chaque pixel voisin pour les pixels de la ligne correspondante dans le bloc prédictif.

Dans le mode de prédiction « Intra » dit « VL » (pour « Vertical-Left »), on utilise les valeurs des pixels voisins du bloc courant appartenant au bloc voisin disposé immédiatement au-dessus et au-dessus à droite du bloc courant, lorsque ces pixels voisins ont été précédemment codés, et on recopie la valeur de chaque pixel voisin pour les pixels de la colonne correspondante dans le bloc prédictif.

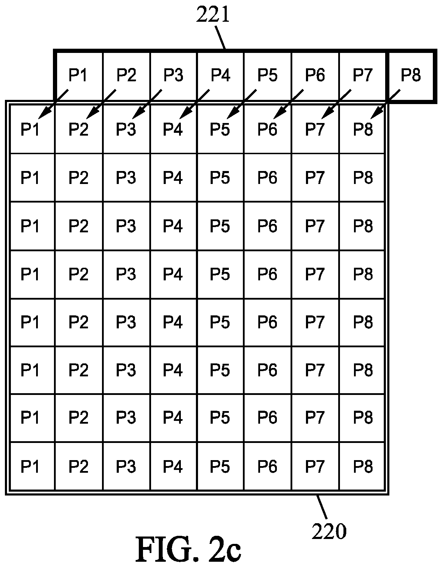

Par exemple, si l'on considère un bloc 220 de 8x8 pixels tel que celui illustré sur la figure 2c, on utilise par exemple l'ensemble de 8 pixels voisins 221 des deux blocs voisins disposés respectivement immédiatement au-dessus et au-dessus sur la droite du bloc courant, dans le cas où le parcours de codage des blocs est tel que ces blocs voisins, ou au moins les pixels voisins considérés, ont déjà été codés. On recopie la valeur de chacun des 8 pixels voisins dans la colonne correspondante du bloc prédictif 220 selon une direction de projection diagonale gauche comme illustré sur la figure 2c.

Le standard de codage vidéo H.264/AVC prévoit 9 modes de prédiction intra (dont les modes de prédiction DC, H, V, VL décrits ci-dessus). Le standard de codage vidéo HEVC prévoit quant à lui un nombre plus important de 35 modes de prédiction intra.

Ces standards de codage vidéo prévoient par ailleurs des cas particuliers pour effectuer une prédiction intra. Par exemple, le standard H.264/AVC autorise le découpage de blocs de 16x16 pixels en blocs plus petits, dont la taille peut aller jusqu'à 4x4 pixels, afin d'augmenter la granularité du traitement de codage prédictif.

Comme indiqué ci-dessus, l'information du mode de prédiction Intra est prédite afin de réduire son coût de codage. En effet, la transmission dans le flux encodé d'un index identifiant le mode de prédiction Intra présente un coût d'autant plus élevé que le nombre des modes de prédiction utilisables est important. Même dans le cas du codage H.264/AVC, la transmission d'un index entre 1 et 9 identifiant le mode de prédiction intra utilisé pour chaque bloc parmi les 9 modes possibles s'avère être chère en termes de coût de codage.

On calcule ainsi un mode le plus probable, noté MPM (en anglais « Most Probable Mode »), qui est utilisé pour coder sur un minimum de bits le mode de prédiction Intra le plus probable. Le MPM est le résultat de la prédiction du mode de prédiction Intra utilisé pour coder le bloc courant.

Lorsque le mode Intra est sélectionné pour l'encodage du bloc courant, on pourra transmettre au décodeur typiquement le résiduel de pixels et le MPM.

Le codage prédictif en mode référencé pour certains codeurs vidéo sous l'appellation « Inter » inclut une prédiction des pixels d'un bloc (ou ensemble) de pixels en cours de traitement à l'aide de pixels issus d'images précédemment codées (pixels qui ne sont donc pas issus de l'image courante, au contraire du mode de prédiction Intra).

Le mode de prédiction Inter utilise typiquement un ou deux ensembles de pixels situés dans une ou deux images précédemment codées afin de prédire les pixels du bloc courant. Cela dit, on peut envisager pour un mode de prédiction Inter l'utilisation de plus de deux ensembles de pixels situés respectivement dans des images précédemment codées distinctes deux-à-deux et dont le nombre est supérieur à deux. Cette technique, appelée compensation de mouvement, fait intervenir la détermination d'un ou de deux vecteurs, dits vecteurs de mouvement, qui indiquent respectivement la position de l'ensemble ou des ensembles de pixels à utiliser pour la prédiction dans l'image ou les images précédemment codées (parfois appelées « images de référence »). En référence à la figure 1, les vecteurs utilisés pour le mode « Inter » sont à choisir par l'encodeur 100 par le biais de l'unité d'estimation de mouvement 110 et de l'unité de prédiction des modes Inter/Skip 104. La mise en oeuvre de l'estimation de mouvement au sein de l'encodeur 100 pourra donc prévoir, selon les cas, la détermination d'un seul vecteur d'estimation de mouvement (noté « L0 » dans la suite) ou bien de deux vecteurs d'estimation de mouvement (notés « L0 » et « L1 » dans la suite) qui pointent vers des images potentiellement différentes.

Le ou les vecteurs d'estimation de mouvement générés en sortie de l'unité d'estimation de mouvement 110 seront fournis à l'unité de prédiction des modes Inter/Skip 104 pour la génération de vecteurs de prédiction Inter. Chaque vecteur de prédiction Inter pourra en effet être généré à partir d'un vecteur d'estimation de mouvement correspondant.

On décrit ci-après plus en détails l'estimation de mouvement pour un bloc courant selon des modes de réalisation.

L'estimation de mouvement peut consister à étudier le déplacement des blocs entre deux images en exploitant la corrélation temporelle entre les pixels. Pour un bloc donné dans l'image courante (le « bloc courant » ou « bloc d'origine »), l'estimation de mouvement permet de sélectionner un bloc le plus ressemblant (dénommé « bloc de référence ») dans une image précédemment codée, dite « image de référence », en représentant le mouvement de ce bloc par exemple avec un vecteur à deux dimensions (déplacement horizontal, déplacement vertical).

Le procédé d'estimation de mouvement est non normatif et est donc susceptible de différer d'un encodeur à un autre.

Par exemple, le procédé d'estimation de mouvement pourra comprendre la recherche dans une zone plus ou moins étendue de l'image de référence, par exemple définie à partir du bloc de l'image de référence correspondant au bloc d'origine dans l'image d'origine, afin de tester la ressemblance du bloc d'origine avec un nombre plus ou moins grand de blocs candidats de l'image de référence.

La corrélation entre un bloc et son déplacement selon un vecteur d'estimation de mouvement peut être calculée à l'aide de la Somme des Différences Absolues (SAD) :

$$\text{SAD} = \sum_x \sum_y |p_{xy} - p'_{xy}| \quad (1)$$

où $p_{xy}$ est le pixel à la position (x,y) du bloc d'origine et $p'_{xy}$ le pixel à la position (x,y) du bloc de référence. Une SAD faible sera interprétée comme une indication que les deux blocs sont très ressemblants.

Le vecteur issu de l'estimation de mouvement, correspondant au bloc de l'image de référence le plus proche du bloc d'origine parmi les blocs candidats testés dans l'image de référence, pourra servir de base à la détermination du vecteur de prédiction Inter. En effet, selon les implémentations, le procédé de prédiction Inter pourra inclure des optimisations visant à sélectionner un vecteur distinct du vecteur issu de l'estimation de mouvement, afin d'avoir une prédiction la moins coûteuse possible pour le mode qui est testé.

Cette optimisation peut par exemple comprendre le test d'un ou de plusieurs vecteurs autour du vecteur issu de l'estimation de mouvement susceptibles de donner un meilleur résultat en fonction de l'objectif poursuivi. Dès lors, le vecteur utilisé pour la prédiction Inter eu égard à une image de référence donnée ne sera pas nécessairement identique au vecteur issu de l'estimation de mouvement pour cette image de référence.

Lorsque le mode Inter est sélectionné pour l'encodage du bloc courant, on pourra transmettre au décodeur typiquement le résiduel de pixels (calculé pour chaque vecteur de prédiction Inter en fonction des pixels du bloc courant et des pixels du bloc vers lequel pointe le vecteur de prédiction Inter considéré) et des informations concernant le ou les vecteurs de prédiction Inter correspondant.

Cependant, le ou les vecteurs de prédiction Inter peuvent représenter un coût important dans les encodeurs vidéo. Certains encodeurs réduisent ce coût de codage en exploitant les vecteurs des blocs voisins du bloc en cours d'encodage. Cette optimisation fait intervenir une prédiction du/des vecteurs de prédiction Inter, à l'instar de la prédiction du mode de prédiction Intra dans le cas d'un codage prédictif du bloc en mode Intra.

Comme indiqué ci-dessus, les informations concernant chaque vecteur de prédiction Inter pourront ainsi être réduites en taille en transmettant, à la place des coordonnées du vecteur par exemple, un indice d'un vecteur prédicteur dans un dictionnaire connu de l'encodeur et du décodeur, et un résiduel quantifiant la distance entre le vecteur de prédiction et le vecteur prédicteur.

Par exemple, dans les codeurs de type H.264/AVC, un vecteur prédicteur médian $mv_{pred}$ est utilisé pour prédire le vecteur à coder $mv$:

$$\varepsilon_{mv} = mv - mv_{pred} \qquad (2)$$

Seul le résiduel $\varepsilon_{mv}$ est transmis dans le flux encodé, de manière à fortement réduire les coûts de codage.

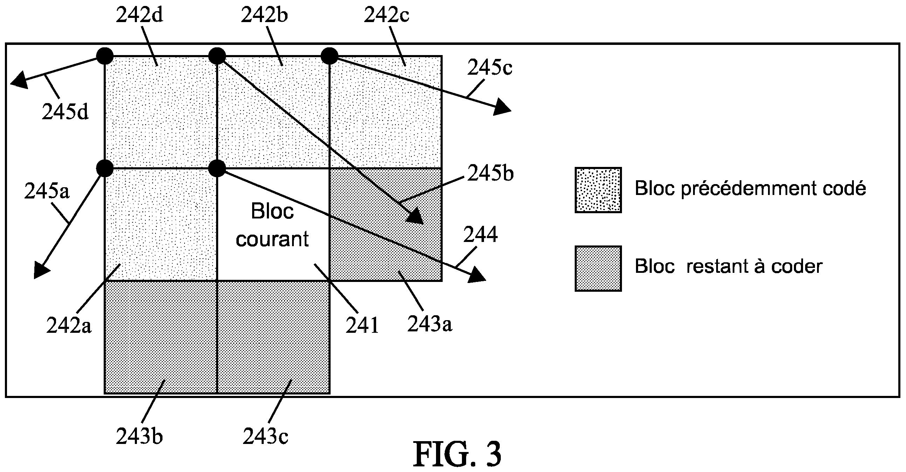

La figure 3 illustre la détermination d'un vecteur prédicteur correspondant dans l'exemple illustré au médian entre les vecteurs de blocs voisins précédemment codés. En référence à la figure 3, le bloc courant (en cours d'encodage) 241 est entouré de quatre blocs voisins 242a, 242b, 242c, 242d précédemment encodés et de trois blocs voisins 243a, 243b, 243c restant à coder.

L'exemple présenté suppose un parcours d'encodage des blocs de l'image tel que, pour chaque bloc en cours d'encodage, les blocs situés à gauche ou au-dessus du bloc courant ont déjà été encodé, de sorte que, sur la figure 3, les blocs voisins 242a, 242b, 242c, 242d précédemment encodés sont situés à gauche 242a ou au-dessus 242b, 242c, 242d du bloc courant 241. Le vecteur prédicteur $mv_{pred}$ 244 du bloc courant 241 correspond au médian entre les vecteurs respectifs 245a, 245b, 245c, 245d des blocs précédemment codés 242a, 242b, 242c ou 242a, 242b, 242d lorsque le bloc 242c n'est par exemple pas disponible (par exemple dans le cas où le bloc 242c est encodé selon un codage prédictif en mode Intra). Un mauvais vecteur prédicteur résultera en un surcoût de codage pour le bloc courant 241. Dans un autre cas particulier où uniquement un ou deux blocs voisins sont codés en mode Inter, le standard H.264/AVC prévoit une règle permettant d'utiliser un des vecteurs disponibles dans la mesure où le médian n'est pas calculable.

Par ailleurs, certains codeurs utilisent, parfois dans le cadre du mode de prédiction « Inter », un mode référencé dans certains codeurs vidéo sous l'appellation « Skip » dans lequel, comme dans le cas du mode Inter, le bloc courant est prédit à l'aide de pixels issus d'images précédemment codées (une ou deux images, voire plus en fonction de l'implémentation). Le mode Skip est d'ailleurs parfois présenté comme un sous-mode du mode Inter, du fait qu'il correspond à un mode de prédiction « Inter » sans transmission (ou génération dans le flux encodé) de vecteur de prédiction ni de résiduel de pixels.

Le mode Skip trouve à s'appliquer lorsque le résiduel de pixels est suffisamment faible pour qu'il soit considéré inutile de le transmettre dans le flux de sortie du codeur. On transmettra donc seulement des informations sur les vecteurs de prédiction Inter, et le bloc indiqué par un vecteur dans l'image de référence sera copié pour générer le bloc courant.

D'autre part, dans une optique de réduction maximale du coût de codage, le ou les vecteurs de prédiction utilisés pour ce mode ne seront typiquement pas transmis au décodeur, et seront déduits par le décodeur à partir d'une liste prédéterminée de vecteurs possibles (appelés, de même que pour le mode « Inter », « vecteurs prédicteurs »), ce qui permettra par exemple de transmettre seulement la position du prédicteur (par exemple un indice de position dans la liste des vecteurs prédicteurs) au lieu de transmettre sa valeur (comme par exemple ses coordonnées). Ainsi, par exemple, dans ce mode de codage, on sélectionne directement un vecteur prédicteur dans une liste prédéterminée connue du décodeur, la sélection du vecteur prédicteur s'effectuant à partir de blocs voisins du bloc courant qui ont été précédemment codés. Comme indiqué ci-dessus, dans les cas où les modes Skip et Inter mis en oeuvre dans le codeur utilisent l'un et l'autre une liste de vecteurs prédicteurs, les listes respectives de vecteurs prédicteurs, que ce soit de par leur taille ou de par leur contenu respectif, ne seront pas nécessairement identiques.

Parmi les modes Inter, Intra, et Skip décrits ci-dessus à titre d'exemple, un mode donné peut avoir un coût faible mais générer un artefact visuel, qui se manifeste le plus souvent par un effet de blocs, comme indiqué dans l'article de Zeng et al. intitulé « Charactérizing Perceptual Artifacts in Compressed Video Streams », Human Vision and Electronic Imaging XIX, Proc. SPIE, vol. 9014. Ce défaut peut subvenir lorsque le vecteur attribué à un bloc ne représente pas le mouvement réel, par exemple d'une portion d'image contenant le bloc en mouvement sur une séquence d'images. Il se manifeste dans ce cas par une discontinuité aux frontières des blocs et peut produire des faux contours ou des blocs entiers mal positionnés.

Dans le cas où une meilleure qualité visuelle est recherchée, il peut être préférable de choisir un mode avec un coût plus élevé mais qui ne génère pas d'artefacts visuels.

Les défauts sont d'autant plus visibles lorsque le mode choisi est un mode Skip, car l'absence de résiduel fait que dans le cas où le vecteur de Skip est mauvais d'un point de vue de la qualité visuelle, le décodeur va copier tel quel un bloc qui est mauvais. Le mode Skip étant un mode qui ne coûte pas très cher de par le peu d'informations générées en sortie de l'encodeur, l'algorithme de sélection du mode de codage utilisé par l'encodeur peut avoir tendance à trop choisir ce mode pour réduire le débit vidéo, ce faisant aux dépens de la qualité visuelle.

De même, en fonction de l'algorithme de sélection de vecteur de prédiction Inter utilisé, l'encodeur peut décider de choisir un vecteur de prédiction Inter trop éloigné du vecteur obtenu par l'estimation de mouvement (par exemple dans le cas où le vecteur choisi nécessite un coût de codage plus faible que le vecteur issu de l'estimation de mouvement), mais cet éloignement peut produire un mouvement incohérent avec le mouvement original de la vidéo, et donc générer un effet de blocs caractéristique d'un artefact visuel indésirable.

Selon un aspect, une méthode de sélection de mode de codage est proposée, qui quantifie la « qualité visuelle » d'un mode testé sous forme d'une distorsion pour ainsi améliorer visuellement les choix de l'encodeur pour tous les modes testés et également éviter les problèmes de Skip abusif décrits ci-dessus.

Dans un mode de réalisation, on utilise une métrique de distorsion visuelle qui reflète la qualité visuelle du mode testé en complément ou comme alternative aux métriques de distorsion objectives telles que la somme des différences absolues (SAD) ou l'erreur quadratique moyenne (MSE). Pour un mode de codage de type à prédiction par corrélation temporelle, comme par exemple un mode de codage de type Inter ou Skip tels que ceux décrits ci-dessus, qui met en oeuvre une détermination d'un vecteur d'estimation de mouvement et d'un vecteur de prédiction, la métrique de distorsion visuelle proposée utilise une distance entre le vecteur de prédiction temporelle et le vecteur d'estimation de mouvement correspondant à une même image de référence.

On donne ci-après des exemples de métriques de distorsion visuelle qui révèlent qu'une métrique de distorsion visuelle ainsi définie s'avère peu coûteuse en calculs et peut dès lors s'intégrer au sein même d'un algorithme de sélection de mode de codage d'un codeur d'images ou d'un codée vidéo, capable de travailler en mode temps-réel ou quasi temps-réel.

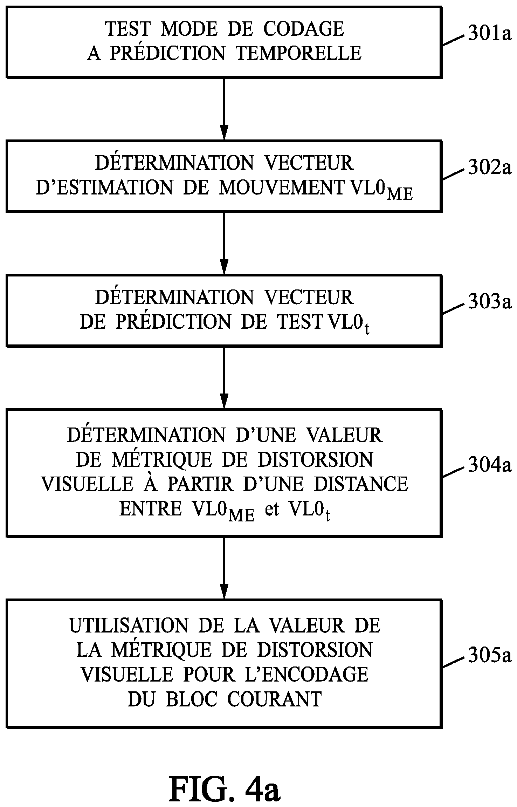

La figure 4a est un diagramme illustrant le procédé proposé selon différents modes particuliers de l'invention.

On envisage le cas d'une image issue d'un ensemble d'images, par exemple une séquence d'images, et découpée en blocs, dont l'encodage est effectué par encodage des blocs, chaque bloc étant encodé selon un parmi une pluralité de modes de codage comprenant au moins un mode de codage de type à prédiction par corrélation temporelle utilisant une pluralité d'images de la séquence d'images .

En référence à la figure 4a, on considère 301a le codage d'un bloc courant selon un mode de codage de type à prédiction par corrélation temporelle utilisant une pluralité d'images de la séquence d'images. En d'autres termes, le procédé d'encodage du bloc courant comprend un traitement de codage du bloc selon un mode de codage de type à prédiction par corrélation temporelle, parfois dénommé « mode test » ou « mode candidat ». L'encodage du bloc courant peut en effet, selon les implémentations, comprendre des tests de différents modes de codage, d'un même type (Inter, Intra, et/ou Skip) ou bien de types différents, afin de sélectionner un mode considéré comme optimal.

Pour le mode de codage à prédiction temporelle testé, on détermine 302a un vecteur d'estimation de mouvement du bloc courant, noté $vL0_{ME}$. Cette détermination d'un vecteur d'estimation de mouvement comprend la sélection dans la séquence d'images d'une image de référence encodée précédemment à l'image courante (selon une séquence d'encodage des images de la séquence) vers laquelle le vecteur d'estimation de mouvement du bloc courant pointe.

On détermine 303a ensuite un vecteur de prédiction de test pour le bloc courant, noté $vL0_t$, qui pointe vers l'image de référence sélectionnée lors de l'estimation de mouvement.

On calcule 304a ensuite un écart entre le vecteur de d'estimation de mouvement $vL0_{ME}$ et le vecteur de prédiction de test $vL0_t$, ce qui fournit une valeur de métrique de distorsion visuelle pour le mode testé.

On utilise 305a cette valeur de métrique de distorsion visuelle pour l'encodage du bloc courant, par exemple pour sélectionner un mode de codage du bloc courant.

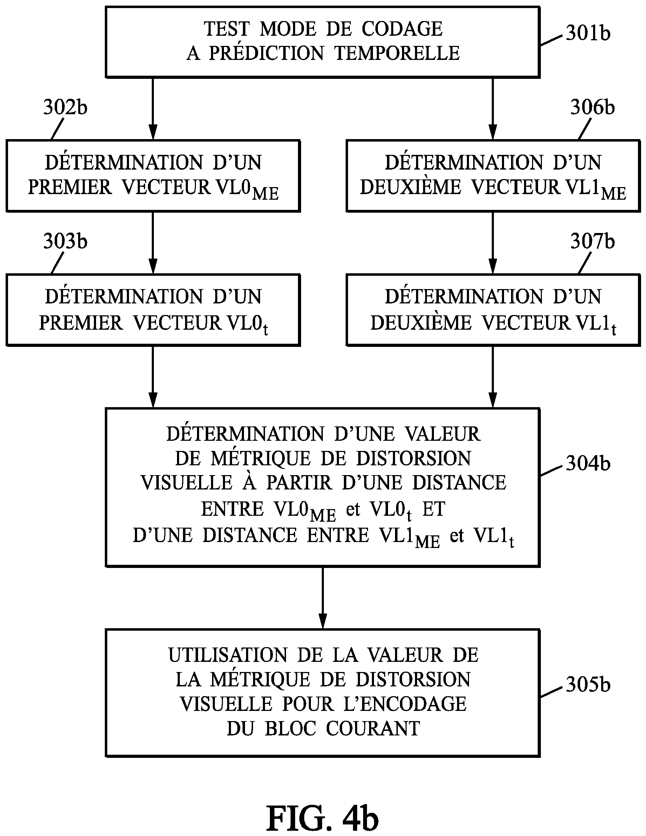

Dans un mode particulier de réalisation, la détermination d'une valeur de la métrique de distorsion visuelle peut faire intervenir une pluralité de vecteurs d'estimation de mouvement et de vecteurs de prédiction correspondants, comme illustré sur la figure 4b qui montre l'utilisation de deux vecteurs d'estimation de mouvement et deux vecteurs de prédiction.

En référence à la figure 4b, on considère 301b le codage d'un bloc courant selon un mode test de codage de type à prédiction par corrélation temporelle utilisant une pluralité d'images de la séquence d'images.

Pour le mode de codage à prédiction temporelle testé, on détermine 302b, 306b des premier et deuxième vecteurs d'estimation de mouvement du bloc courant, notés respectivement $vL0_{ME}$ et $vL1_{ME}$. Ces déterminations de vecteurs d'estimation de mouvement peuvent être effectuées en parallèle, ou bien à la suite l'une de l'autre. Elles comprennent respectivement la sélection dans la séquence d'images d'une première et d'une seconde image de référence, chacune encodée précédemment à l'image courante (selon une séquence d'encodage des images de la séquence) vers laquelle les vecteurs d'estimation de mouvement du bloc courant pointent respectivement.

On détermine 303b, 307b ensuite des premier et deuxième vecteurs de prédiction de test pour le bloc courant, notés respectivement $vL0_t$ et $vL1_t$, respectivement associés aux vecteurs d'estimation de mouvement en ce qu'ils pointent respectivement vers les première et deuxième images de référence sélectionnées lors de l'estimation de mouvement.

On calcule 304b ensuite un premier écart entre le premier vecteur de d'estimation de mouvement $vL0_{ME}$ et le premier vecteur de prédiction de test $vL0_t$, et un deuxième écart entre le deuxième vecteur de d'estimation de mouvement $vL1_{ME}$ et le deuxième vecteur de prédiction de test $vL1_t$, et on détermine une valeur de métrique de distorsion visuelle pour le mode testé à partir de ces premier et deuxième écarts.

On utilise 305b cette valeur de métrique de distorsion visuelle pour l'encodage du bloc courant, par exemple pour sélectionner un mode de codage du bloc courant.

En fonction de l'implémentation du codeur, les procédés décrits ci-dessus en référence aux Figures 4a et 4b peuvent être mis en oeuvre dans le cadre d'un procédé d'encodage qui sélectionne un mode d'encodage pour le bloc courant après avoir testé une pluralité de modes d'encodage et sélectionné parmi les modes testés un mode d'encodage considéré comme optimal au regard d'un critère prédéterminé (parfois dénommé « critère de décision locale »). Dans ce cas, la métrique de distorsion visuelle définie ci-dessus pourra être utilisée pour sélectionner le mode d'encodage optimal en étant intégrée au critère de décision locale.

Dans un mode particulier de réalisation, on prend ainsi en compte la qualité visuelle du mode testé en introduisant une métrique de distorsion visuelle dans un critère de décision locale (c'est-à-dire pour l'encodage du bloc courant). L'optimisation débit-distorsion consiste en effet habituellement à minimiser un critère de décision locale. Un exemple conventionnel d'un tel critère, noté $J$, est donné ci-après : $J = D + \lambda R$, où $D$ désigne la distorsion, A est un multiplicateur de Lagrange et R désigne le débit associé au codage de la décision estimée.

Le critère de décision locale est évalué pour une pluralité de modes de codage disponibles, par exemple pour chaque mode de codage disponible, et le mode minimisant le critère est sélectionné. Dans le critère J, la distorsion $D$ peut être calculée à l'aide de métriques dites « objectives » telles que la SAD (1) définie ci-dessus ou l'Erreur Quadratique Moyenne (MSE) :

$$\mathrm{MSE} = \frac{1}{n}\sum_x \sum_y (p_{xy} - p'_{xy})^2 \qquad (3)$$

où $p_{xy}$ est le pixel à la position (x,y) du bloc d'origine et $p'_{xy}$ le pixel à la position ($x,y$) du bloc de référence et $n$ le nombre de pixels dans le bloc.

Le critère conventionnel $J = D + \lambda R$, reposant sur une détermination de la distorsion utilisant des métriques objectives, n'inclut dès lors pas de prise en compte de la qualité visuelle du mode testé.

Dans ce mode particulier de réalisation, le critère de décision locale J est modifié pour y introduire une mesure de distorsion visuelle (aussi appelée « distorsion subjective »). Par exemple, le critère $J$ est modifié en un critère amélioré, noté J', énoncé ci-après : $J' = D + D' + \lambda R$ (4) où $D$ est la distorsion objective, $D'$ est la distorsion subjective, A le multiplicateur de Lagrange et R le débit de codage.

Le choix de mode de codage effectué sur la base du critère modifié J' permet à l'encodeur de prendre en compte la qualité visuelle dans sa décision. Selon un mode particulier de réalisation, on calcule pour chaque mode testé la valeur d'un critère d'optimisation débit-distorsion incluant une mesure de distorsion subjective, comme par exemple le critère J' énoncé ci-dessus, et on sélectionne le mode de codage minimisant ce critère pour l'encodage du bloc courant.

Les modes testés peuvent inclure plusieurs modes correspondant à un même type de prédiction, par exemple parmi les types Inter, Intra, et/ou Skip décrits ci-dessus. En particulier, on peut tester plusieurs vecteurs de prédiction Inter candidats identifiés par un algorithme de prédiction Inter générant une pluralité de vecteurs candidats (par exemple de 1 à 10 vecteurs candidats) à partir du vecteur issu de l'estimation de mouvement. Chaque vecteur candidat pourra représenter un mode testé distinct de sorte qu'il y aura plusieurs modes candidats testés pour la prédiction de type Inter.

Le choix de mode de codage pourra donc comprendre la sélection de paramètres d'encodage du bloc courant correspondant à un type de prédiction parmi les types de prédiction (Inter, Intra, et/ou Skip) disponibles pour l'encodage.

Dans un mode de réalisation, la distorsion subjective $D'$ mesure, pour une prédiction de type Inter ou Skip, la distance entre le vecteur de prédiction et le vecteur issu de l'estimation de mouvement. De cette manière, on choisit le mode avec le coût le plus faible possible tout en restant cohérent avec le mouvement de l'image. Plus le vecteur de prédiction du mode de type Inter ou Skip testé est éloigné du vecteur de l'estimation de mouvement, plus il est considéré « mauvais » visuellement, et donc plus grande sera la distorsion subjective D', ce qui désavantagera le mode testé et ainsi favorisera des modes qui seront plus « corrects » visuellement.

On décrit ci-après des exemples de métrique de distorsion visuelle applicables aux modes de codage de type à prédiction temporelle, par exemple aux modes des types Inter et Skip décrits ci-dessus.

Dans un mode particulier de réalisation, pour les modes de codage qui utilisent une prédiction temporelle à partir d'une image précédemment codée, la distorsion visuelle (ou subjective) peut être mesurée grâce à une métrique, notée D', de la forme :

$$D' = dist(vL0_t, vL0_{ME}) \qquad (5).$$

$dist(vL0_t, vL0_{ME})$ est la distance entre le vecteur de prédiction temporelle en cours de test «$vL0_t$ », et le vecteur obtenu par l'estimation de mouvement « $vL0_{ME}$ ».

Il existe plusieurs manières pour définir la distance entre deux vecteurs $v_1(x_1,y_1)$ et $v_2(x_2,y_2)$.

Dans un mode particulier, on utilise la distance euclidienne définie par la formule suivante :

$$dist(v_1, v_2) = \sqrt{(x_1 - x_2)^2 + (y_1 - y_2)^2} \qquad (6)$$

Dans un autre mode particulier de réalisation, la métrique de distorsion visuelle D' définie ci-dessus peut être adaptée au cas d'un mode de codage qui utilise une prédiction temporelle à partir de deux images précédemment codées, pour prendre la forme suivante :

$$D' = dist(vL0_t, vL0_{ME}) + dist(vL1_t, vL1_{ME}) \qquad (7).$$

$dist(vL0_t, vL0_{ME})$ est la distance entre le premier vecteur de prédiction temporelle en cours de test « $vL0_t$ », et le premier vecteur obtenu par l'estimation de mouvement « $vL0_{ME}$ ».

$dist(vL1_t, vL1_{ME})$ est la distance entre le deuxième vecteur de prédiction temporelle en cours de test « $vL1_t$ », et le deuxième vecteur obtenu par l'estimation de mouvement « $vL1_{ME}$ ».

Les deux distances $dist(vL0_t, vL0_{ME})$ et $dist(vL1_t, vL1_{ME})$ peuvent être déterminées selon la formule de calcul de la distance euclidienne énoncée ci-dessus.

La formulation de la métrique de distorsion visuelle ci-dessus peut être généralisée au cas d'un mode de codage utilisant une prédiction temporelle à partir de N images précédemment codées, N étant un entier supérieur ou égal à 1, selon la formule suivante : $D' = \sum_{i=1}^{N} \left( dist\left( v_{t,i}, v_{ME,i} \right) \right)$, (8), où $dist(v_{t,i}, v_{ME,i})$ est une distance entre un $i^{ème}$ vecteur de prédiction temporelle en cours de test, $v_{ti}$, et un $i^{ème}$ vecteur obtenu par l'estimation de mouvement, $v_{ME,i}$, les deux vecteurs $v_{ti}$ et $v_{ME,i}$ pointant sur une même image parmi les N images précédemment codées.

Dans un mode de réalisation particulier, chaque distance entre un vecteur de prédiction temporelle et le vecteur d'estimation de mouvement correspondant utilisée dans la détermination de la métrique de distorsion visuelle D' est pondérée d'un facteur de confiance dans la qualité de l'estimation de mouvement, et par conséquent dans le vecteur d'estimation de mouvement qui en résulte.

L'estimation de mouvement peut en effet donner des vecteurs plus ou moins précis selon la qualité de l'estimateur. Il peut arriver parfois que même un bon estimateur de mouvement se trompe, par exemple dans le cas d'une source vidéo très bruitée, ou lorsqu'un objet apparait ou disparait d'une image à une autre (dans ce cas le bon vecteur n'existe pas).

Ce mode de réalisation prévoit donc un facteur qui définit l'exactitude du vecteur d'estimation de mouvement utilisé, ce qui a l'avantage de permettre de pondérer l'influence du vecteur d'estimation de mouvement utilisé dans le calcul de la distorsion visuelle.

Ainsi, chacune des métriques de distorsion visuelle D' définies ci-dessus peut intégrer dans un mode de réalisation particulier un facteur multiplicatif de chaque distance vecteur de prédiction - vecteur de mouvement représentant la confiance que l'on peut avoir dans la qualité de l'estimation de mouvement ayant généré le vecteur de mouvement.

Par exemple, pour un mode de codage utilisant une prédiction temporelle à partir d'une image précédemment codée, la métrique de distorsion visuelle pourra prendre la forme : $D' = K_{L0} \times dist(vL0_t, vL0_{ME})$ (9), et pour un mode de codage utilisant une prédiction temporelle à partir de deux images précédemment codées, la métrique de distorsion visuelle pourra prendre la forme : $D' = K_{L0} \times dist(vL0_t, vL0_{ME}) + K_{L1} \times dist(vL1_t, vL1_{ME})$ (10), où $K_{L0}$ et $K_{L1}$ sont respectivement les degrés de confiance des vecteurs d'estimation de mouvement $vL0_{ME}$ et $vL1_{ME}$.

Dans un mode de réalisation particulier, le calcul d'un degré de confiance de vecteur d'estimation de mouvement se base sur l'inverse de la corrélation entre le bloc courant et son déplacement selon le vecteur d'estimation de mouvement. Cette corrélation peut par exemple être calculée à l'aide de la Somme des Différences Absolues (SAD), comme expliqué ci-dessus.

Dans un mode de réalisation particulier dans lequel on calcule la valeur d'une métrique de distorsion objective pour un mode testé de codage utilisant une prédiction temporelle (par exemple de type Inter ou Skip) à l'aide d'un calcul de SAD, on peut se baser sur le résultat de calcul de SAD obtenu pour le vecteur d'estimation de mouvement en utilisant la fonction inverse.

Ainsi, le degré de confiance sera d'autant plus élevé que la SAD calculée sera faible, et inversement.

Le degré de confiance utilisé pourra donc être de la forme :

$$k_v = {}^1\!/_{SAD_v} \qquad (11)$$

Les exemples de métrique de distorsion visuelle définis ci-dessus peuvent en outre, dans un autre mode de réalisation particulier, intégrer un coefficient multiplicateur de Lagrange, noté $\lambda$. Ce coefficient, avantageusement choisi propre à l'encodeur, permet de prendre en compte le débit de codage de l'image. Il sera de préférence choisi d'autant plus grand que le débit disponible est faible. L'utilisation de ce coefficient permet de pondérer l'impact de la métrique de distorsion visuelle D' sur le choix du mode de codage en fonction du débit de codage disponible. Si ce débit est faible, on peut vouloir que l'encodeur tienne compte de la métrique de distorsion visuelle, et prenne des décisions de mode de codage favorisant une faible distorsion visuelle. A l'inverse, si ce débit est élevé, on peut vouloir que le la métrique de distorsion visuelle n'ait pas un fort impact sur les décisions de mode de codage prises par l'encodeur ou, autrement dit, que l'encodeur ne prenne pas trop en compte la métrique de distorsion visuelle. De fait, à haut débit, les artefacts visuels sont moins présents, alors qu'ils sont plus courants à bas débit.

Par exemple, pour un mode de codage utilisant une prédiction temporelle à partir d'une image précédemment codée, la métrique de distorsion visuelle pourra prendre la forme : $D' = \lambda \times K_{L0} \times dist(vL0_t, vL0_{ME})$ (12), et pour un mode de codage utilisant une prédiction temporelle à partir de deux images précédemment codées, la métrique de distorsion visuelle pourra prendre la forme : $D' = \lambda \times (K_{L0} \times dist(vL0_t, vL0_{ME}) + K_{L1} \times dist(vL1_t, vL1_{ME}))$ (13), où $K_{L0}$ et $K_{L1}$ sont respectivement les degrés de confiance des vecteurs d'estimation de mouvement $vL0_{ME}$ et $vL1_{ME}$, et où $\lambda$ est un coefficient multiplicateur de Lagrange.

Dans un autre mode de réalisation particulier, les exemples de métriques de distorsion visuelle définis ci-dessus peuvent intégrer une constante de normalisation, notée $M_{BlockSize}$, afin de permettre une comparaison de distorsion visuelle pour des blocs de tailles différentes. Certains codées permettent en effet d'utiliser des tailles de blocs différentes. C'est le cas par exemple du codée HEVC, qui permet d'utiliser des tailles de blocs allant de 64 pixels $\times$ 64 pixels à 8 pixels $\times$ 8 pixels (blocs de taille 64 pixels $\times$ 64 pixels, 32 pixels $\times$ 32 pixels, 16 pixels x16 pixels, ou 8 pixels $\times$ 8 pixels). Le codée H.264/AVC permet aussi d'utiliser des blocs de taille 16x16 ou 8x8.

Dans ce cas, il est souhaitable de prendre en compte la taille du bloc afin d'obtenir des distorsions qui sont comparables lorsqu'on compare les coûts de deux blocs qui n'ont pas la même taille par exemple.

Par exemple, pour un mode de codage utilisant une prédiction temporelle à partir d'une image précédemment codée, la métrique de distorsion visuelle pourra prendre la forme : $D' = M_{BlockSize} \times \lambda \times K_{L0} \times dist(vL0_t, vL0_{ME})$ (14), et pour un mode de codage utilisant une prédiction temporelle à partir de deux images précédemment codées, la métrique de distorsion visuelle pourra prendre la forme : $D' = M_{BlockSize} \times \lambda \times (K_{L0} \times dist(vL0_t, vL0_{ME}) + K_{L1} \times dist(vL1_t, vL1_{ME}))$ (15), où $K_{L0}$ et $K_{L1}$ sont respectivement les degrés de confiance des vecteurs d'estimation de mouvement $vL0_{ME}$ et $vL1_{ME}$, $\lambda$ est un coefficient multiplicateur de Lagrange, et $M_{Blocksize}$ est une constante de normalisation choisie en fonction de la taille du bloc en cours d'encodage.

Dans un autre mode de réalisation particulier, les exemples de métriques de distorsion visuelle définis ci-dessus peuvent intégrer une constante de normalisation, notée C, afin d'obtenir une valeur de métrique de distorsion visuelle D' qui soit comparable à une autre mesure de distorsion (par exemple la mesure de distorsion objective du critère J' énoncé ci-dessus) prise en compte dans le critère de décision locale. Cette constante peut être déterminée de manière empirique, par exemple en pratiquant des tests avec le codeur considéré et en choisissant la constante qui convient au plus grand nombre de cas possibles.

Par exemple, pour un mode de codage utilisant une prédiction temporelle à partir d'une image précédemment codée, la métrique de distorsion visuelle pourra prendre la forme : $D' = C \times M_{BlockSize} \times \lambda \times K_{L0} \times dist(vL0_t, vL0_{ME})$ (16), et pour un mode de codage utilisant une prédiction temporelle à partir de deux images précédemment codées, la métrique de distorsion visuelle pourra prendre la forme : $D' = C \times M_{BlockSize} \times \lambda \times (K_{L0} \times dist(vL0_t, vL0_{ME}) + K_{L1} \times dist(vL1_t, vL1_{ME}))$ (17), où $K_{L0}$ et $K_{L1}$ sont respectivement les degrés de confiance des vecteurs d'estimation de mouvement $vL0_{ME}$ et $vL1_{ME}$, $\lambda$ est un coefficient multiplicateur de Lagrange, $M_{BlockSize}$ est une constante de normalisation choisie en fonction de la taille du bloc en cours d'encodage, et C est une constante de normalisation choisie en fonction des valeurs des autres métriques de distorsion prises en compte dans le critère de décision locale.

Là encore, l'expression de la métrique de distorsion visuelle peut être généralisée au cas d'un mode de codage utilisant une prédiction temporelle à partir d'une pluralité de N images précédemment codées, N étant un entier supérieur ou égal à deux, auquel cas la métrique de distorsion visuelle pourra prendre la forme : $D' = C \times \lambda \times M_{blocSize} \times \sum_{i=1}^{N}\left(K_i \times dist\left(v_{t,i}, v_{ME,i}\right)\right)$ (18), où C est une constante de normalisation, $\lambda$ est un coefficient multiplicateur de Lagrange, $dist(v_{t,i}, v_{ME,i})$ est une distance entre un $i^{ème}$ vecteur d'estimation de mouvement, $v_{ME,i}$ parmi N vecteurs d'estimation de mouvement pointant respectivement sur un bloc corrélé au bloc courant dans N images respectives deux-à-deux distinctes, distinctes de la première image et précédemment codées selon la séquence d'encodage, et un $i^{ème}$ vecteur de prédiction temporelle, $v_{ti}$ parmi N vecteurs de prédiction temporelle du bloc courant, pointant sur la même image que le vecteur d'estimation de mouvement $v_{ME,i}$, $K_i$ est un degré de confiance du $i^{ème}$ vecteur d'estimation de mouvement $v_{ME,i}$, et $M_{blocSize}$ est une constante de normalisation déterminée en fonction de la taille du bloc courant.

Le mouvement n'entrant pas en compte pour coder un bloc en mode Intra, une valeur de distorsion qui dépendrait du mouvement n'a donc pas lieu d'être déterminée pour ce mode. Néanmoins, une distorsion subjective *D'* doit quand même être prise en compte dans le critère de décision locale utilisé, afin de pourvoir comparer les différents coûts obtenus pour les modes testés, sans favoriser un mode par rapport à un autre.

Dans un mode particulier de réalisation, une distorsion subjective *D'* est ajoutée à la distorsion objective *D* pour obtenir un coût de mode Intra selon la formule (4) ci-dessus (*J' = D + D' + λR*). Le coût du mode Intra, calculé par le critère de décision locale à minimiser *J' = D + D' + λR,* peut ainsi être rendu comparable aux coûts des autres modes. Cette valeur de distorsion subjective définie pour les modes Intra présente l'avantage d'éviter de favoriser le mode Intra aux dépens d'autres modes de codage testés sur un même critère de décision locale. On pourra par exemple utiliser pour le mode Intra une distorsion *D'* d'une valeur fixe obtenue de manière empirique.

On décrit ci-après un exemple de mise en oeuvre du procédé proposé dans le cas d'un encodeur utilisant des modes de prédiction de type Intra, Inter et Skip tels que définis par le standard HEVC.

L'exemple présenté correspond au cas d'une décision entre les deux modes Skip et Intra pour un bloc donné. Le procédé proposé est appliqué pour calculer le coût de chaque mode.

L'algorithme de sélection de mode de l'encodeur peut par exemple tester le mode Skip, le mode Inter et le mode Intra pour choisir le meilleur mode.

Test du mode Skip :

En référence à la figure 1, l'estimation de mouvement 110 fournit un ensemble de vecteurs de mouvement de la forme ($v_{ME,0},... v_{ME,N}$) avec N le nombre d'images référence possibles pour ce bloc. L'unité de prédiction Inter/Skip 104 génère une liste de candidats pour le mode Skip, appelés candidats de prédiction Skip, de la forme {$cand_0, ... cand_K$} où K est le nombre de candidats et où chaque candidat est de la forme $cand_i = (p_{i,0}, ... p_{i,N})$ avec N le nombre d'images référence possibles.

Pour chaque candidat de prédiction Skip $cand_i$, l'unité d'encodage 111 effectue les opérations suivantes :

Calcul du débit de codage R.
Calcul de la distorsion objective *D*.
Calcul de la distorsion subjective *D'* en utilisant la formule (18) ci-dessus et l'ensemble de vecteurs issus de l'estimation de mouvement.

$$D'_i = C \times \lambda \times M_{blocSize} \times \sum_{j=0}^{N} \left( K_j \times dist(p_{i,j}, v_{ME,j}) \right)$$

La distorsion subjective sera élevée si le vecteur de prédiction est éloigné du vecteur de l'estimation de mouvement.

Calcul du coût obtenu pour ce vecteur de prédiction en utilisant la formule (4) ci-dessus (*J' = D + D' + λR* ).

L'unité d'encodage 111 compare ensuite les coûts de tous les candidats de prédiction testés, et sélectionne celui qui correspond au coût le plus faible. Ce coût sera celui du mode Skip pour le bloc courant. Le vecteur de prédiction Skip choisi avec cette méthode est celui qui donne le meilleur résultat visuel.

Test du mode Inter :

En référence à la figure 1, l'estimation de mouvement 110 fournit un ensemble de vecteurs de mouvement de la forme ($v_{ME,0},... v_{ME,N}$) avec N le nombre d'images référence possibles pour ce bloc. L'unité de prédiction Inter/Skip 104 génère une liste de vecteurs possibles pour le mode Inter, appelés vecteurs de mouvement Inter, de la forme {$VM_0, ... VM_K$} où K est le nombre de vecteurs à tester et où chaque vecteur est de la forme $VM_i = (v_{i,0}, ... v_{i,N})$ avec N le nombre d'images référence possibles.

Pour chaque candidat de mouvement Inter MVi, l'unité d'encodage 111 effectue les opérations suivantes :

Calcul du débit de codage R.
Calcul de la distorsion objective *D*.
Calcul de la distorsion subjective *D'* en utilisant la formule (18) ci-dessus et l'ensemble de vecteurs issus de l'estimation de mouvement.

$$D'_i = C \times \lambda \times M_{blocSize} \times \sum_{j=0}^{N} \left( K_j \times dist\left( MV_{i,j}, v_{ME,j} \right) \right)$$

La distorsion subjective sera élevée si le vecteur de prédiction est éloigné du vecteur de l'estimation de mouvement.

Calcul du coût obtenu pour ce vecteur de prédiction en utilisant la formule (4) ci-dessus ($J' = D + D' + \lambda R$).

L'unité d'encodage 111 compare ensuite les coûts de tous les vecteurs de mouvement Inter testés, et sélectionne celui qui correspond au coût le plus faible. Ce coût sera celui du mode Inter pour le bloc courant.

Test du mode Intra :

On suppose qu'il existe plusieurs directions Intra possibles pour le bloc courant.

Pour chaque direction possible, l'unité d'encodage 111 effectue les opérations suivantes :

Calcul du débit de codage R.
Calcul de la distorsion objective $D$.
Calcul de la distorsion subjective $D'$ qui est égale à une constante empirique :

$$D' = Cst_{Intra} \qquad (19)$$

Calcul du coût obtenu pour cette direction Intra en utilisant la formule (4) ci-dessus ($J' = D + D' + \lambda R$ ).

L'unité d'encodage 111 compare ensuite les coûts de toutes les directions Intra, et sélectionne la direction qui correspond au coût le plus faible. Ce coût sera celui du mode Intra pour le bloc courant.

Les coûts des modes Inter, Skip et Intra sont ensuite comparés par l'unité d'encodage 111 pour décider du meilleur mode. Dans le cas où le meilleur vecteur de prédiction Skip obtenu est « mauvais » visuellement, le coût du mode Skip sera élevé, et l'unité d'encodage choisira de coder le bloc selon le mode de codage Intra ou Inter pour un meilleur rendu visuel si le coût du mode Skip est supérieur au coût des modes Intra et Inter.

**Revendications**

**1.** Procédé d'encodage d'une première image dans un ensemble d'images, dans lequel la première image est découpée en blocs, chaque bloc étant encodé selon un parmi une pluralité de modes de codage comprenant au moins un mode de codage de type à prédiction par corrélation temporelle utilisant une pluralité d'images de l'ensemble d'images, le procédé comprenant, pour un bloc courant de la première image :

déterminer un premier vecteur d'estimation de mouvement du bloc courant, le premier vecteur d'estimation de mouvement pointant sur un bloc corrélé au bloc courant dans une deuxième image de l'ensemble d'images distincte de la première image et précédemment codée selon une séquence prédéfinie d'encodage des images de l'ensemble d'images;
déterminer une valeur d'une métrique de distorsion pour un mode de codage de type à prédiction par corrélation temporelle, la métrique de distorsion utilisant une distance entre un premier vecteur prédicteur du premier vecteur d'estimation de mouvement du bloc courant pointant sur la deuxième image et le premier vecteur d'estimation de mouvement du bloc courant;
utiliser la valeur de la métrique de distorsion pour l'encodage du bloc courant, le procédé comprenant en outre :

déterminer une pluralité de valeurs d'un critère de décision pour respectivement différents modes tests de codage du bloc courant, le critère de décision comprenant la métrique de distorsion ; et
sélectionner un mode de codage correspondant à un minimum des valeurs respectives du critère de décision pour les différents modes tests de codage du bloc courant.

**2.** Procédé d'encodage selon la revendication 1, comprenant en outre :

déterminer une pluralité de N vecteurs d'estimation de mouvement du bloc courant, N étant un entier supérieur ou égal à deux, chaque vecteur d'estimation de mouvement pointant respectivement sur un bloc corrélé au bloc courant dans N images respectives distinctes de la première image et précédemment codées selon la séquence d'encodage, et distinctes deux-à-deux ;

dans lequel la métrique de distorsion utilise en outre des distances respectives entre un vecteur prédicteur du premier vecteur d'estimation de mouvement du bloc courant pointant sur une parmi les images respectives et un parmi la pluralité de N vecteurs d'estimation de mouvement du bloc courant pointant sur l'une parmi les images respectives.

**3.** Procédé selon l'une des revendications précédentes, dans lequel la métrique de distorsion pour le mode de codage de type à prédiction par corrélation temporelle utilisant N images de l'ensemble d'images, N étant un entier supérieur ou égal à 1, est de la forme :

$$\sum_{i=1}^{N} dist(v_{t,i}, v_{ME,i}),$$

où

$dist(v_{t,i}, v_{ME,i})$ est une distance entre un $i^{ème}$ vecteur d'estimation de mouvement, $v_{ME,i}$ parmi N vecteurs d'estimation de mouvement pointant respectivement sur un bloc corrélé au bloc courant dans N images respectives deux-à-deux distinctes, distinctes de la première image et précédemment codées selon la séquence d'encodage, et un $i^{ème}$ vecteur prédicteur de vecteur d'estimation de mouvement, $v_{ti}$ parmi N vecteurs prédicteurs de vecteur d'estimation de mouvement du bloc courant, pointant sur la même image que le vecteur d'estimation de mouvement $v_{ME,i}$.

**4.** Procédé selon l'une des revendications précédentes, dans lequel la métrique de distorsion pour le mode de codage de type à prédiction par corrélation temporelle utilisant N images de l'ensemble d'images, N étant un entier supérieur ou égal à 1, est de la forme :

$$C \times \lambda \times M_{blocSize} \times \sum_{i=1}^{N} \left( K_i \times dist(v_{t,i}, v_{ME,i}) \right),$$

où

C est une constante de normalisation,
$\lambda$ est un coefficient multiplicateur de Lagrange, $dist(v_{t,i}, v_{ME,i})$ est une distance entre un $i^{ème}$ vecteur d'estimation de mouvement, $v_{ME,i}$ parmi N vecteurs d'estimation de mouvement pointant respectivement sur un bloc corrélé au bloc courant dans N images respectives deux-à-deux distinctes, distinctes de la première image et précédemment codées selon la séquence d'encodage, et un $i^{ème}$ prédicteur de vecteur d'estimation de mouvement, $v_{ti}$ parmi N vecteurs prédicteurs de vecteur d'estimation de mouvement du bloc courant, pointant sur la même image que le vecteur d'estimation de mouvement $v_{ME,i}$,
$K_i$ est un degré de confiance du $i^{ème}$ vecteur d'estimation de mouvement $v_{ME,i}$, et
$M_{blocSize}$ est une constante de normalisation déterminée en fonction de la taille du bloc courant.

**5.** Procédé selon l'une quelconque des revendications précédentes, dans lequel la pluralité de modes de codage comprend en outre un mode de codage à prédiction par corrélation spatiale de type Intra.

**6.** Procédé selon l'une quelconque des revendications précédentes, dans lequel le mode de codage de type à prédiction par corrélation temporelle utilisant une pluralité d'images de l'ensemble d'images est de type utilisant une prédiction de mouvement à partir d'images précédemment codées ou de type utilisant un vecteur prédicteur prédéterminé sélectionné à partir de blocs voisins du bloc courant précédemment codés.

**7.** Procédé selon l'une quelconque des revendications précédentes, dans lequel la métrique de distorsion inclut un facteur de confiance dans l'estimation de mouvement.

**8.** Procédé selon la revendication 7, dans lequel le facteur de confiance est déterminé relativement à l'inverse d'une mesure de corrélation entre le bloc courant et son déplacement selon un vecteur d'estimation de mouvement.

**9.** Procédé selon la revendication 1, dans lequel le critère de décision est de la forme : $J' = D + \lambda R + D'$, où $D$ est une métrique de distorsion introduite par l'encodage mesurant la corrélation entre le bloc courant et le bloc prédit, $\lambda$ est

un coefficient multiplicateur de Lagrange, R représente un débit de codage, et *D*' est la métrique de distorsion .

10. Procédé selon la revendication 9, dans lequel la métrique *D*' de distorsion est, pour un mode test de codage de type à prédiction par corrélation temporelle utilisant deux images de l'ensemble d'images, de la forme : $D' = C \times \lambda \times M_{blocSize} \times (K_{L0} \times dist(vL0_t, vL0_{ME}))$, où C est une constante de normalisation, $\lambda$ est le coefficient multiplicateur de Lagrange, $dist(vL0_t, vL0_{ME})$ est une distance entre le premier vecteur prédicteur du premier vecteur d'estimation de mouvement, $vL0_t$, et le premier vecteur d'estimation de mouvement, $vL0_{ME}$, $K_{L0}$ est un degré de confiance du premier vecteur d'estimation de mouvement $vL0_{ME}$, et $M_{blocSize}$ est une constante de normalisation déterminée en fonction de la taille du bloc courant.

11. Procédé selon la revendication 9, dans lequel la métrique *D*' de distorsion est, pour un mode test de codage de type à prédiction par corrélation spatiale, une constante prédéterminée.

12. Dispositif d'encodage d'images comprenant :

une interface d'entrée configurée pour recevoir une première image d'un ensemble d'images;
une unité d'encodage d'images, couplée de manière opérationnelle à l'interface d'entrée, et configurée pour :

• découper la première image en blocs
• encoder chaque bloc selon un parmi une pluralité de modes de codage comprenant au moins un mode de codage de type à prédiction par corrélation temporelle utilisant une pluralité d'images de l'ensemble d'images selon le procédé de l'une quelconque des revendications 1 à 11.

13. Programme d'ordinateur, chargeable dans une mémoire associée à un processeur, et comprenant des portions de code pour la mise en oeuvre des étapes d'un procédé selon l'une quelconque des revendications 1 à 11 lors de l'exécution dudit programme par le processeur.

14. Support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoire et à un module d'interface entrées/sorties, conduire l'ordinateur à encoder une première image découpée en blocs selon le procédé de l'une quelconque des revendications 1 à 11.

**Patentansprüche**

1. Verfahren zum Codieren eines ersten Bildes in einem Bildersatz, wobei das erste Bild in Blöcke zerlegt wird, wobei jeder Block gemäß einem einer Vielzahl von Codiermodi, die mindestens einen Codiermodus vom Typ mit Prädiktion durch zeitliche Korrelation unter Verwendung einer Vielzahl von Bildern des Bildersatzes umfasst, codiert wird, wobei das Verfahren umfasst, für einen aktuellen Block des ersten Bildes:

Bestimmen eines ersten Bewegungsschätzvektors des aktuellen Blocks, wobei der erste Bewegungsschätzvektor auf einen Block zeigt, der in einem zweiten Bild des Bildersatzes, das sich vom ersten Bild unterscheidet und zuvor gemäß einer vordefinierten Sequenz zum Codieren der Bilder des Bildersatzes codiert wurde, mit dem aktuellen Block korreliert ist,
Bestimmen eines Werts einer Verzerrungsmetrik für einen Codiermodus vom Typ mit Prädiktion durch zeitliche Korrelation, wobei die Verzerrungsmetrik einen Abstand zwischen einem ersten Prädiktionsvektor des ersten Bewegungsschätzvektors des aktuellen Blocks, der auf das zweite Bild zeigt, und dem ersten Bewegungsschätzvektor des aktuellen Blocks verwendet,
Verwenden des Werts der Verzerrungsmetrik zum Codieren des aktuellen Blocks, wobei das Verfahren weiter umfasst:

Bestimmen einer Vielzahl von Werten eines Entscheidungskriteriums für jeweils verschiedene Testmodi zum Codieren des aktuellen Blocks, wobei das Entscheidungskriterium die Verzerrungsmetrik umfasst, und
Auswählen eines Codiermodus, der einem Minimum der jeweiligen Werte des Entscheidungskriteriums für die verschiedenen Testmodi zum Codieren des aktuellen Blocks entspricht.

2. Codierverfahren nach Anspruch 1, weiter umfassend:

   Bestimmen einer Vielzahl von N Bewegungsschätzvektoren des aktuellen Blocks, wobei N eine ganze Zahl größer oder gleich zwei ist, wobei jeder Bewegungsschätzvektor jeweils auf einen Block zeigt, der in N jeweiligen Bildern, die sich vom ersten Bild unterscheiden und zuvor gemäß der Codiersequenz codiert wurden und sich paarweise unterscheiden, mit dem aktuellen Block korreliert ist,
   wobei die Verzerrungsmetrik weiter jeweilige Abstände zwischen einem Prädiktionsvektor des ersten Bewegungsschätzvektors des aktuellen Blocks, der auf eines der jeweiligen Bilder zeigt, und einem der Vielzahl von N Bewegungsschätzvektoren des aktuellen Blocks, der auf eines der jeweiligen Bilder zeigt, verwendet.

3. Verfahren nach einem der vorstehenden Ansprüche, wobei die Verzerrungsmetrik für den Codiermodus vom Typ mit Prädiktion durch zeitliche Korrelation unter Verwendung von N Bildern des Bildersatzes, wobei N eine ganze Zahl größer oder gleich 1 ist, die folgende Form aufweist:

$$\sum_{i=1}^{N} dist\left(v_{t,i}, v_{ME,i}\right),$$

   wobei

   $dist(v_{t,i}, v_{ME,i})$ ein Abstand zwischen einem i-ten Bewegungsschätzvektor, $v_{ME,i}$, von N Bewegungsschätzvektoren, die jeweils auf einen Block zeigen, der in N jeweiligen Bildern, die sich paarweise unterscheiden, sich vom ersten Bild unterscheiden und zuvor gemäß der Codiersequenz codiert wurden, mit dem aktuellen Block korreliert ist, und einem i-ten Bewegungsschätzvektor-Prädiktor, $v_{ti}$, von N Bewegungsschätzvektor-Prädiktionsvektoren des aktuellen Blocks, die auf das gleiche Bild zeigen wie der Bewegungsschätzvektor $v_{ME,i}$, ist.

4. Verfahren nach einem der vorstehenden Ansprüche, wobei die Verzerrungsmetrik für den Codiermodus vom Typ mit Prädiktion durch zeitliche Korrelation unter Verwendung von N Bildern des Bildersatzes, wobei N eine ganze Zahl größer oder gleich 1 ist, die folgende Form aufweist:

$$C \times \lambda \times M_{blocSize} \times \sum_{i=1}^{N} \left(K_i \times dist\left(v_{t,i}, v_{ME,i}\right)\right),$$

   wobei

   C eine Normalisierungskonstante ist,
   $\lambda$ ein Lagrange-Multiplikator ist,
   $dist(v_{t,i}, v_{ME,i})$ ein Abstand zwischen einem i-ten Bewegungsschätzvektor, $v_{ME,i}$, von N Bewegungsschätzvektoren, die jeweils auf einen Block zeigen, der in N jeweiligen Bildern, die sich paarweise unterscheiden, sich vom ersten Bild unterscheiden und zuvor gemäß der Codiersequenz codiert wurden, mit dem aktuellen Block korreliert ist, und einem i-ten Bewegungsschätzvektor-Prädiktionsvektor, $v_{ti}$, von N Bewegungsschätzvektor-Prädiktionsvektoren des aktuellen Blocks, die auf das gleiche Bild zeigen wie der Bewegungsschätzvektor $v_{ME,i}$, ist,
   $K_i$ ein Konfidenzniveau des i-ten Bewegungsschätzvektors $v_{ME,i}$ ist, und
   $M_{blocSize}$ eine Normalisierungskonstante ist, die in Abhängigkeit von der Größe des aktuellen Blocks bestimmt wird.

5. Verfahren nach einem der vorstehenden Ansprüche, wobei die Vielzahl von Codiermodi weiter einen Codiermodus mit Prädiktion durch räumliche Korrelation vom Typ Intra umfasst.

6. Verfahren nach einem der vorstehenden Ansprüche, wobei der Codiermodus vom Typ mit Prädiktion durch zeitliche Korrelation unter Verwendung einer Vielzahl von Bildern des Bildersatzes von dem Typ ist, der eine Bewegungsprädiktion auf Grundlage von zuvor codierten Bildern verwendet, oder von dem Typ ist, der einen vorbestimmten Prädiktionsvektor verwendet, welcher auf Grundlage von zuvor codierten Nachbarblöcken des aktuellen Blocks ausgewählt wird.

7. Verfahren nach einem der vorstehenden Ansprüche, wobei die Verzerrungsmetrik einen Konfidenzfaktor in der Bewegungsschätzung einbezieht.

8. Verfahren nach Anspruch 7, wobei der Konfidenzfaktor relativ zum Kehrwert eines Korrelationsmaßes zwischen dem aktuellen Block und seiner Verlagerung gemäß einem Bewegungsschätzvektor bestimmt wird.

9. Verfahren nach Anspruch 1, wobei das Entscheidungskriterium die folgende Form aufweist: $J' = D + \lambda R + D'$, wobei $D$ eine durch die Codierung eingeführte Verzerrungsmetrik ist, die die Korrelation zwischen dem aktuellen Block und dem prädizierten Block misst, $\lambda$ ein Lagrange-Multiplikator ist, R eine Codierrate darstellt, und $D'$ die Verzerrungsmetrik ist.

10. Verfahren nach Anspruch 9, wobei die Verzerrungsmetrik $D'$ für einen Codier-Testmodus vom Typ mit Prädiktion durch zeitliche Korrelation unter Verwendung von zwei Bildern des Bildersatzes die folgende Form aufweist: $D' = C \times \lambda \times M_{blocSize} \times (K_{L0} \times dist(vL0_t, vL0_{ME}))$, wobei C eine Normalisierungskonstante ist, $\lambda$ der Lagrange-Multiplikator ist, $dist(vL0_t, vL0_{ME})$ ein Abstand zwischen dem ersten Prädiktionsvektor des ersten Bewegungsschätzvektors, $vL0_t$, und dem ersten Bewegungsschätzvektor, $vL0_{ME}$, ist, $K_{L0}$ ein Konfidenzniveau des ersten Bewegungsschätzvektors $vL0_{ME}$ ist, und $M_{blockSize}$ eine Normalisierungskonstante ist, die in Abhängigkeit von der Größe des aktuellen Blocks bestimmt wird.

11. Verfahren nach Anspruch 9, wobei die Verzerrungsmetrik $D'$ für einen Codier-Testmodus vom Typ mit Prädiktion durch räumliche Korrelation eine vorbestimmte Konstante ist.

12. Vorrichtung zum Codieren von Bildern, umfassend:

eine Eingabeschnittstelle, die so konfiguriert ist, dass sie ein erstes Bild eines Bildersatzes empfängt;
eine Einheit zum Codieren von Bildern, die funktionsmäßig mit der Eingabeschnittstelle gekoppelt und so konfiguriert ist, dass sie:

- das erste Bild in Blöcke zerlegt,
- jeden Block gemäß einem einer Vielzahl von Codiermodi, die mindestens einen Codiermodus vom Typ mit Prädiktion durch zeitliche Korrelation unter Verwendung einer Vielzahl von Bildern des Bildersatzes umfasst, gemäß dem Verfahren nach einem der Ansprüche 1 bis 11 codiert.

13. Computerprogramm, das in einen Speicher geladen werden kann, der mit einem Prozessor verknüpft ist, und Codeabschnitte zur Umsetzung der Schritte eines Verfahrens nach einem der Ansprüche 1 bis 11 bei der Ausführung des Programms durch den Prozessor umfasst.

14. Nichtflüchtiges Speichermedium für ein computerausführbares Programm, das einen Datensatz umfasst, der ein oder mehrere Programme darstellt, wobei das eine oder die mehreren Programme Anweisungen umfassen, um bei der Ausführung des einen oder der mehreren Programme durch einen Computer, der eine Verarbeitungseinheit umfasst, die funktionsmäßig mit Speichermitteln und einem Eingabe/Ausgabe-Schnittstellenmodul gekoppelt ist, den Computer dazu zu bringen, ein erstes in Blöcke zerlegtes Bild gemäß dem Verfahren nach einem der Ansprüche 1 bis 11 zu codieren.

**Claims**

1. Method for encoding a first image in a set of images, in which the first image is split into blocks, each block being encoded according to one among a plurality of coding modes comprising at least one coding mode of the temporal correlation prediction type using a plurality of images from the set of images, the method comprising, for a current block of the first image:

determining a first motion estimation vector of the current block, the first motion estimation vector pointing to a block correlated with the current block in a second image from the set of images, distinct from the first image and previously coded according to a predefined encoding sequence of the images from the set of images;
determining a value of a visual distortion metric for a coding mode of the temporal correlation prediction type, the visual distortion metric using a distance between a first temporal prediction vector of the current block pointing to the second image and the first motion estimation vector of the current block;
using the value of the visual distortion metric for encoding the current block,
the method further comprising:

determining a plurality of values of a decision criterion for respectively different test coding modes of the current block, the decision criterion comprising the visual distortion metric; and

selecting a coding mode corresponding to a minimum of the respective values of the decision criterion for the different test coding modes of the current block.

2. Encoding method according to claim 1, also comprising:

determining a plurality of N motion estimation vectors of the current block, N being an integer greater than or equal to two, each motion estimation vector pointing respectively to a block correlated with the current block in N respective images distinct from the first image and previously coded according to the encoding sequence, and in distinct pairs;

in which the visual distortion metric also uses respective distances between a temporal prediction vector of the current block pointing to one among the respective images and one among the plurality of N motion estimation vectors of the current block pointing to one among the respective images.

3. Method according to one of the preceding claims, in which the visual distortion metric for the coding mode of the temporal correlation prediction type using N images from the set of images, N being an integer greater than or equal to 1, is in the form

$$\sum_{i=1}^{N} dist\big(v_{t,i}, v_{ME,i}\big),$$

where

$dist(v_{t,i}, v_{ME,i})$ is a distance between an $i^{th}$ motion estimation vector, $v_{ME,i}$ among N motion estimation vectors pointing respectively to a block correlated with the current block in N distinct respective paired images, distinct from the first image and previously coded according to the encoding sequence, and an $i^{th}$ temporal prediction vector, $v_{ti}$ among N temporal prediction vectors of the current block, pointing to the same image as the motion estimation vector $v_{ME,i}$.

4. Method according to one of the preceding claims, in which the visual distortion metric for the coding mode of the temporal correlation prediction type using N images from the set of images, N being an integer greater than or equal to 1, is in the form:

$$C \times \lambda \times M_{blockSize} \times \sum_{i=1}^{N} \big(K_i \times dist\big(v_{t,i}, v_{ME,i}\big)\big),$$

where

C is a normalization constant,

A is a Lagrange multiplier coefficient,

$dist(v_{t,i}, v_{ME,i})$ is a distance between an $i^{th}$ motion estimation vector, $v_{ME,i}$ among N motion estimation vectors pointing respectively to a block correlated with the current block in N distinct respective paired images, distinct from the first image and previously coded according to the encoding sequence, and an $i^{th}$ temporal prediction vector, $v_{ti}$ among N temporal prediction vectors of the current block, pointing to the same image as the motion estimation vector $v_{ME,i}$.

$K_i$ is a degree of confidence of the $i^{th}$ motion estimation vectors $v_{ME,i}$ and.

$M_{blockSize}$ is a normalization constant determined as a function of the size of the current block.

5. Method according to any one of the preceding claims, in which the plurality of coding modes also comprises an Intra-type spatial correlation prediction coding mode.

6. Method according to any one of the preceding claims, in which the coding mode of the temporal correlation prediction type using a plurality of images from the set of images is of the type using a motion prediction based on previously coded images or of the type using a predetermined prediction vector selected from previously coded blocks neighbouring the current block.

7. Method according to any one of the preceding claims, in which the visual distortion metric includes a confidence factor for the motion estimation.

8. Method according to claim 7, in which confidence factor is determined relative to the inverse of a measurement of correlation between the current block and its movement according to a motion estimation vector.

9. Method according to claim 1, in which the decision criterion is in the form: $J' = D + \lambda R + D'$ where $D$ is a distortion metric introduced by the encoding measuring the correlation between the current block and the predicted block, A is a Lagrange multiplier coefficient, R represents a coding rate, and $D'$ is a visual distortion metric.

10. Method according to claim 9, in which the visual distortion metric D', for a test coding mode of the temporal correlation prediction type using two images from the set of images, in the form: $D' = C \times \lambda \times M_{blockSize} \times (K_{L0} \times dist(vL0_t, vL0_{ME}))$, where C is a normalization constant, A is the Lagrange multiplier coefficient, $dist(vL0_t, vL0_{ME})$ is a distance between the first temporal prediction vector, $vL0_t$ and the first motion estimation vector, $vL0_{ME}$, $K_{L0}$ is a degree of confidence of the first motion estimation vector $vL0_{ME}$, and $M_{blockSize}$ is a normalization constant determined as a function of the size of the current block.

11. Method according to claim 9, in which the visual distortion metric visual distortion metric D', for a test coding mode of the spatial correlation prediction type, is a predetermined constant.

12. Device for encoding images comprising:

an input interface configured for receiving a first image from a set of images;
a unit for encoding images, operatively coupled to the input interface, and configured for:

• splitting the first image into blocks
• encoding each block according to one among a plurality of coding modes comprising at least one coding mode of the temporal correlation prediction type using a plurality of images from the set of images according to the method of any one of claims 1 to 11.

13. Computer program which can be loaded into a memory associated with a processor, and comprising portions of code for implementing the steps of a method according to any one of claims 1 to 11 during the execution of said program by the processor.

14. Non-transitory storage medium of a computer-executable program, comprising a data set representing one or more programs, said one or more programs comprising instructions for causing the computer to encode a first image split into blocks according to the method according to claim 1 to 11, during the execution of said one or more programs by a computer comprising a processing unit operatively coupled to memory means and to an input/output interface module.

FIG. 1

- 105 CODEUR ENTROPIQUE
- 107 DONNÉES PRÉDICTION "INTRA"
- 108 DONNÉES CONTRÔLE
- 106 DONNÉES PRÉDICTION "INTER" / "SKIP"
- 103 PRÉDICTION MODE "INTRA"
- 102 CONTRÔLEUR
- 104 PRÉDICTION MODES "INTER" et "SKIP"
- 110 ESTIMATION DE MOUVEMENT
- 111
- 109
- 101 SIGNAL ENTRÉE VIDÉO
- 100

EP 3 225 029 B1

| 202 | | | | | | | | |
|---|---|---|---|---|---|---|---|---|
| 201 | | | | | | | | |
| | M | M | M | M | M | M | M | M |
| | M | M | M | M | M | M | M | M |
| | M | M | M | M | M | M | M | M |
| | M | M | M | M | M | M | M | M |
| | M | M | M | M | M | M | M | M |
| | M | M | M | M | M | M | M | M |
| | M | M | M | M | M | M | M | M |
| | M | M | M | M | M | M | M | M |

200

**FIG. 2a**

| P1 | P2 | P3 | P4 | P5 | P6 | P7 | P8 |
|---|---|---|---|---|---|---|---|
| P1 | P2 | P3 | P4 | P5 | P6 | P7 | P8 |
| P1 | P2 | P3 | P4 | P5 | P6 | P7 | P8 |
| P1 | P2 | P3 | P4 | P5 | P6 | P7 | P8 |
| P1 | P2 | P3 | P4 | P5 | P6 | P7 | P8 |
| P1 | P2 | P3 | P4 | P5 | P6 | P7 | P8 |
| P1 | P2 | P3 | P4 | P5 | P6 | P7 | P8 |
| P1 | P2 | P3 | P4 | P5 | P6 | P7 | P8 |
| P1 | P2 | P3 | P4 | P5 | P6 | P7 | P8 |

211

210

**FIG. 2b**

FIG. 2c

FIG. 3

TEST MODE DE CODAGE
A PRÉDICTION TEMPORELLE — 301a

DÉTERMINATION VECTEUR
D'ESTIMATION DE MOUVEMENT $VL0_{ME}$ — 302a

DÉTERMINATION VECTEUR
DE PRÉDICTION DE TEST $VL0_t$ — 303a

DÉTERMINATION D'UNE VALEUR
DE MÉTRIQUE DE DISTORSION
VISUELLE À PARTIR D'UNE DISTANCE
ENTRE $VL0_{ME}$ et $VL0_t$ — 304a

UTILISATION DE LA VALEUR DE
LA MÉTRIQUE DE DISTORSION
VISUELLE POUR L'ENCODAGE
DU BLOC COURANT — 305a

# FIG. 4a

| TEST MODE DE CODAGE A PRÉDICTION TEMPORELLE | 301b |

DÉTERMINATION D'UN PREMIER VECTEUR $VL0_{ME}$ — 302b

DÉTERMINATION D'UN DEUXIÈME VECTEUR $VL1_{ME}$ — 306b

DÉTERMINATION D'UN PREMIER VECTEUR $VL0_t$ — 303b

DÉTERMINATION D'UN DEUXIÈME VECTEUR $VL1_t$ — 307b

DÉTERMINATION D'UNE VALEUR DE MÉTRIQUE DE DISTORSION VISUELLE À PARTIR D'UNE DISTANCE ENTRE $VL0_{ME}$ et $VL0_t$ ET D'UNE DISTANCE ENTRE $VL1_{ME}$ et $VL1_t$ — 304b

UTILISATION DE LA VALEUR DE LA MÉTRIQUE DE DISTORSION VISUELLE POUR L'ENCODAGE DU BLOC COURANT — 305b

FIG. 4b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **GARY J. SULLIVAN et al.** Overview of the High Efficiency Video Coding (HEVC) Standard. *IEEE Transactions on Circuits and Systems for Video Technology,* Décembre 2012, vol. 22 (12
- **J. LUBIN et al.** Sarnoff JND vision model. *T1A1.5 Working Group Document, T1 Standards Committee,* 1997
- Digitial vidéo quality metric based on human vision. *Journal of electronic imaging,* Janvier 2001, vol. 10 (1), 20-29
- **Z. WANG et al.** Video Quality Assessment Based on Structural Distorsion MEasurement. *IEEE Signal Proc. Image Communication,* Février 2004, vol. 19 (2), 121-132
- Efficient rate-distortion optimization for HEVC using SSIM and motion homogeneity. **QI JI et al.** PICTURE CODING SYMPOSIUM (PCS). IEEE, 08 Décembre 2013, 217-220
- **A. BHAT et al.** *A new perceptual quality metric for compressed vidéo*
- **ZENG et al.** Charactérizing Perceptual Artifacts in Compressed Video Streams. *Human Vision and Electronic Imaging XIX, Proc. SPIE,* vol. 9014